# EUROPEAN PATENT APPLICATION

(11) **EP 4 708 090 A1**
(43) Date of publication of application: **11.03.2026**
(21) Application number: 24829771.5
(22) Date of filing: 23.01.2024
(51) Int. Cl.: G06F 21/34, H04W 12/06

(54) **AUTHENTICATION METHOD, ELECTRONIC DEVICE, AND SYSTEM**

(30) Priority: 26.06.2023 CN 202310761765
(71) Applicant: Huawei Technologies Co., Ltd., Shenzhen, Guangdong 518129 (CN)
(72) Inventor: LIU, Tianshi, Shenzhen, Guangdong 518129 (CN); LIU, Hanxiong, Shenzhen, Guangdong 518129 (CN); LI, Changting, Shenzhen, Guangdong 518129 (CN); FANG, Xiwen, Shenzhen, Guangdong 518129 (CN)
(74) Representative: Isarpatent
(86) International application number: PCT/CN2024/073725
(87) International publication number: WO 2025/001108

(57) **Abstract**

This application provides an authentication method, an electronic device, and a system, and relates to the field of terminal technologies. In this application, user identity authentication is adaptively completed based on a user identity authentication success event recorded in a trusted holding device, thereby improving use convenience of a user. The method includes: A second electronic device receives an authentication request from a first electronic device that has a short-range communication connection to the second electronic device, where an authentication trust level supported by the second electronic device meets a first authentication trust level requirement of a first service on which user identity authentication is to be performed in the first electronic device; matches, in a first state, a first authentication result corresponding to the authentication request in a first list, where the first list includes a user identity authentication success event generated by at least one of the second electronic device or the first electronic device; and sends the first authentication result to the first electronic device, where the first authentication result is used to generate a second authentication result indicating whether trusted authentication of the second electronic device succeeds.

## Description

This application claims priority to Chinese Patent Application No. 202310761765.6, filed with the China National Intellectual Property Administration on June 26, 2023 and entitled "AUTHENTICATION METHOD, ELECTRONIC DEVICE, AND SYSTEM", which is incorporated herein by reference in its entirety.

### TECHNICAL FIELD

This application relates to the field of terminal technologies, and in particular, to an authentication method, an electronic device, and a system.

### BACKGROUND

To protect device security, user identity authentication is required before some services of an electronic device are used. The user identity authentication includes password authentication, facial recognition, fingerprint recognition, trusted holding device authentication, and the like. During the trusted holding device authentication, the electronic device may determine a user identity based on an authentication trust status of a trusted holding device. In this way, a user does not need to directly operate the electronic device, thereby improving use convenience of the user. For example, a watch is a trusted holding device of a mobile phone. When the watch is in an authentication trusted state, and the user wears the watch and approaches the mobile phone, the watch may directly authorize the mobile phone to be unlocked, and the user does not need to unlock the mobile phone through a password, facial recognition, or the like.

### SUMMARY

Currently, a device like a watch can be used as a trusted holding device. However, a device like a band or a headset cannot be used as a trusted holding device due to a weak capability and poor security of the device. In addition, when the trusted holding device is in an authenticated untrusted state or a distance between the trusted holding device and an electronic device exceeds a preset range, the electronic device cannot perform user identity authentication through the trusted holding device.

To resolve the foregoing technical problem, this application provides an authentication method, an electronic device, and a system. According to a technical solution provided in this application, user identity authentication is adaptively completed based on a user identity authentication success event that is locally recorded in the trusted holding device or that is sent by an authentication device, thereby improving use convenience of a user.

To achieve the foregoing technical objective, this application provides the following technical solutions.

According to a first aspect, an authentication method is provided, and applied to a second electronic device. The method includes: receiving an authentication request from a first electronic device, where a short-range communication connection is established between the first electronic device and the second electronic device, an authentication trust level supported by the second electronic device meets a first authentication trust level requirement, and the first authentication trust level requirement is a lowest authentication trust level of a first service on which user identity authentication is to be performed in the first electronic device; matching, in a first state, a first authentication result corresponding to the authentication request in a first list, where the first list includes at least one of a first event or a second event, the first event is a local user identity authentication success event monitored by the second electronic device, and the second event is a user identity authentication success event from the first electronic device; and sending the first authentication result to the first electronic device, where the first authentication result is used to generate a second authentication result indicating whether trusted authentication of the second electronic device succeeds.

In this way, the second electronic device in the first state monitors and records the user identity authentication success event, and subsequently performs user identity authentication flexibly based on recorded content, to meet a use requirement of a user.

In addition, the second electronic device records the user identity authentication success event, and returns different authentication results based on a set of recorded authentication events, thereby improving authentication flexibility while meeting user identity authentication security.

In addition, the second electronic device has poor device performance, and therefore has a low device security capability level. However, the second electronic device can also receive a user identity authentication success event that corresponds to a high authentication trust level and that is sent by another device. In this way, the second electronic device subsequently determines the authentication result based on the recorded user identity authentication success event, so that the second electronic device with poor device performance can complete user identity authentication on the first electronic device that has a high authentication trust level requirement, thereby enriching authentication scenarios.

According to the first aspect, the method further includes: performing real-time authentication in a second state, to generate a third authentication result; and sending the third authentication result to the first electronic device, where the third authentication result is used to generate the second authentication result indicating whether the trusted authentication of the second electronic device succeeds.

In this way, in the conventional technology, if the second electronic device is in the second state, the user cannot use the second electronic device to trigger user identity authentication of the first electronic device, and can only return to a first electronic device side to perform user identity authentication. User operations are complex. According to the authentication method provided in this embodiment of this application, when the second electronic device is in the second state, the second electronic device may also perform real-time authentication. The user only needs to operate the second electronic device at hand, to complete user identity authentication of the first electronic device, thereby improving use convenience of the user.

According to the first aspect or any one of the foregoing implementations of the first aspect, the method further includes: receiving a confirmation request from the first electronic device, where the confirmation request is a request sent by the first electronic device to the second electronic device when the first electronic device determines that a second authentication trust level does not meet the first authentication trust level requirement, and the second authentication trust level is an authentication trust level determined after the first electronic device adjusts a first authentication trust level carried in the first authentication result; in response to receiving a user confirmation request, obtaining a confirmation result based on a user operation; and sending the confirmation result to the first electronic device, where the confirmation result is used to determine the second authentication result.

In this way, when the second electronic device is not within a ranging range or a ranging security level does not meet a requirement, the second electronic device may also determine, through user confirmation, a final authentication result based on the authentication result determined by the second electronic device and a user confirmation result. The user only needs to operate the second electronic device at hand to complete user identity authentication of the first electronic device, thereby improving use convenience of the user.

According to the first aspect or any implementation of the first aspect, before receiving the authentication request from the first electronic device, the method further includes: obtaining a user identity authentication success event, where the user identity authentication success event is from at least one of the second electronic device or the first electronic device; and recording the user identity authentication success event in the first list in a carried state.

According to the first aspect or any implementation of the first aspect, before receiving the authentication request from the first electronic device, the method further includes: clearing, when it is determined that the carried state is exited, the user identity authentication success event recorded in the first list; and sending a first state invalidity notification to the first electronic device, where the first state invalidity notification indicates that the second electronic device is in the second state.

In some examples, when it is determined that the carried state is exited, the second electronic device does not record a currently obtained user identity authentication success event, and may perform an operation of clearing a valid authentication event list again, to avoid that the first list stores a user identity authentication success event recorded in a previous carried state period, thereby affecting authentication security.

In this way, subsequently, the second electronic device performs a user identity authentication procedure on the first electronic device based on a user identity authentication success event recorded in a single carried state period, thereby improving authentication security.

In addition, when in the carried state, the second electronic device may meet user identity authentication requirements of the first electronic device at different authentication trust levels based on recorded user identity authentication success events corresponding to different authentication trust levels.

According to the first aspect or any implementation of the first aspect, before receiving the authentication request from the first electronic device, the method further includes: receiving a trusted holding device addition request from the first electronic device; sending device information to the first electronic device, where the device information is used to add the second electronic device as a trusted holding device of the first electronic device; and receiving a trusted holding device addition response from the first electronic device, and determining to become the trusted holding device of the first electronic device.

In this way, the first electronic device adds the second electronic device as the trusted holding device, so that the first electronic device can complete user identity authentication through the second electronic device subsequently.

According to the first aspect or any implementation of the first aspect, the device information includes one or more of the following: identity authentication capability information supported by the second electronic device, a ranging manner supported by the second electronic device, a security capability level credential of the second electronic device, and device identity credential information.

According to the first aspect or any implementation of the first aspect, the second electronic device is in the carried state, and the method further includes: in the second state, receiving a first user identity authentication success event from the first electronic device, where the first user identity authentication success event is the user identity authentication success event detected by the first electronic device; and switching the second state to the first state.

In this way, the second electronic device implements flexible switching between the first state and the second state through monitoring on the carried state and the local user identity authentication success event or the user identity authentication success event sent by the first electronic device, to meet a subsequent user identity authentication requirement of the first electronic device.

According to the first aspect or any implementation of the first aspect, the authentication request carries a service constraint condition, and the service constraint condition includes one or more of the following: the first authentication trust level requirement, a user identity confirmation time requirement, a user identity confirmation manner requirement, a user identity confirmation device requirement, an available user confirmation identifier, and a real-time authentication trigger identifier.

According to a second aspect, an authentication method is provided, and applied to a first electronic device. The method includes: sending an authentication request to a second electronic device in response to a user identity authentication request of a first service in the first electronic device, where a short-range communication connection is established between the first electronic device and the second electronic device, an authentication trust level supported by the second electronic device meets a first authentication trust level requirement, and the first authentication trust level requirement is a lowest authentication trust level required by the first service; receiving a first authentication result from the second electronic device, where the first authentication result is an authentication result that is obtained by the second electronic device in a first state through matching in a first list, the first list includes at least one of a first event or a second event, the first event is a local user identity authentication success event monitored by the second electronic device, and the second event is a user identity authentication success event from the first electronic device; and determining a second authentication result based on the first authentication result, where the second authentication result indicates whether trusted authentication of the second electronic device succeeds.

According to the second aspect, the method further includes: receiving a third authentication result from the second electronic device, where the third authentication result is an authentication result generated by the second electronic device in a second state through real-time authentication; and determining the second authentication result based on the third authentication result.

According to the second aspect or any implementation of the second aspect, determining the second authentication result based on the first authentication result includes: detecting that the first authentication result is a non-real-time authentication result, and performing ranging on the second electronic device, to generate a ranging result; and when the ranging result meets a preset distance requirement, determining a first ranging security level of the second electronic device, and adjusting, based on the first ranging security level, a first authentication trust level carried in the first authentication result, to determine the second authentication result, where the second authentication result includes a second authentication trust level.

According to the second aspect or any implementation of the second aspect, when the second authentication trust level meets the first authentication trust level requirement, the second authentication result indicates that the trusted authentication of the second electronic device succeeds.

In this way, different authentication trust levels supported by the second electronic device are evaluated based on different security capability levels of the second electronic device, to support service operations of different risks, thereby expanding a range of the first electronic device supported by the second electronic device, and ensuring security of using an authentication result.

According to the second aspect or any implementation of the second aspect, the method further includes: sending a user confirmation request to the second electronic device when the second authentication trust level does not meet the first authentication trust level requirement; receiving a confirmation result from the second electronic device, where the confirmation result is a result determined by the second electronic device based on a user operation; and determining the second authentication result in response to receiving the confirmation result.

According to the second aspect or any implementation of the second aspect, determining the second authentication result in response to receiving the confirmation result includes: matching a corresponding second ranging security level based on a manner of receiving the confirmation result; and determining the second authentication result based on the second ranging security level.

In this way, in the conventional technology, if the second electronic device is not within a ranging range, the user cannot use the second electronic device to authorize user identity authentication for the first electronic device, and can only return to a first electronic device side to perform user identity authentication. User operations are complex. According to the authentication method provided in this embodiment of this application, when the second electronic device is not within the ranging range, the second electronic device may also determine, through user confirmation, a final authentication result based on the authentication result determined by the second electronic device and a user confirmation result. The user only needs to operate the second electronic device at hand to complete user identity authentication of the first electronic device, thereby improving use convenience of the user.

According to the second aspect or any implementation of the second aspect, adjusting, based on the first ranging security level, the first authentication trust level carried in the first authentication result includes: obtaining first information, where the first information includes a security level of a trusted relationship between the first electronic device and the second electronic device, a security level of first state maintenance of the second electronic device, a security level of carried state detection of the second electronic device, and the first ranging security level; and determining a security capability level of the second electronic device based on the first information. When the security capability level is a high level, the second authentication trust level is equal to the first authentication trust level. When the security capability level is a medium level, the second authentication trust level is lower than the first authentication trust level. When the security capability level is a low level, the second authentication trust level is a level 0 or a level 1.

According to the second aspect or any implementation of the second aspect, before sending the authentication request to the second electronic device in response to the user identity authentication request of the first service in the first electronic device, the method further includes: sending a trusted holding device addition request to the second electronic device; receiving device information from the second electronic device, where the device information is information determined by the second electronic device in response to receiving the trusted holding device addition request; and adding the second electronic device as a trusted holding device based on the device information.

According to the second aspect or any implementation of the second aspect, the device information includes one or more of the following: identity authentication capability information supported by the second electronic device, a ranging manner supported by the second electronic device, a security capability level credential of the second electronic device, and device identity credential information.

According to the second aspect or any implementation of the second aspect, the authentication request carries a service constraint condition, and the service constraint condition includes one or more of the following: the first authentication trust level requirement, a user identity confirmation time requirement, a user identity confirmation manner requirement, a user identity confirmation device requirement, an available user confirmation identifier, and a real-time authentication trigger identifier.

According to the second aspect or any implementation of the second aspect, the method further includes: detecting a first user identity authentication success event; and sending the first user identity authentication success event to the second electronic device.

For technical effects corresponding to the second aspect and any implementation of the second aspect, refer to technical effects corresponding to the first aspect and any implementation of the first aspect. Details are not described herein again.

According to a third aspect, an electronic device is provided. The electronic device includes a processor and a memory. The memory is coupled to the processor. The memory is configured to store computer program code. The computer program code includes computer instructions. When the processor reads the computer instructions from the memory, the electronic device is enabled to perform the following: receiving an authentication request from a first electronic device, where a short-range communication connection is established between the first electronic device and a second electronic device, an authentication trust level supported by the second electronic device meets a first authentication trust level requirement, and the first authentication trust level requirement is a lowest authentication trust level of a first service on which user identity authentication is to be performed in the first electronic device; matching, in a first state, a first authentication result corresponding to the authentication request in a first list, where the first list includes at least one of a first event or a second event, the first event is a local user identity authentication success event monitored by the second electronic device, and the second event is a user identity authentication success event from the first electronic device; and sending the first authentication result to the first electronic device, where the first authentication result is used to generate a second authentication result indicating whether trusted authentication of the second electronic device succeeds.

According to the third aspect, when the processor reads the computer instructions from the memory, the electronic device is further enabled to perform the following: performing real-time authentication in a second state, to generate a third authentication result; and sending the third authentication result to the first electronic device, where the third authentication result is used to generate the second authentication result indicating whether the trusted authentication of the second electronic device succeeds.

According to the third aspect or any implementation of the third aspect, when the processor reads the computer instructions from the memory, the electronic device is further enabled to perform the following: receiving a confirmation request from the first electronic device, where the confirmation request is a request sent by the first electronic device to the second electronic device when the first electronic device determines that a second authentication trust level does not meet the first authentication trust level requirement, and the second authentication trust level is an authentication trust level determined after the first electronic device adjusts a first authentication trust level carried in the first authentication result; and in response to receiving a user confirmation request, obtaining a confirmation result based on a user operation; and sending the confirmation result to the first electronic device, where the confirmation result is used to determine the second authentication result.

According to the third aspect or any implementation of the third aspect, when the processor reads the computer instructions from the memory, the electronic device is further enabled to perform the following: obtaining a user identity authentication success event, where the user identity authentication success event is from at least one of the second electronic device or the first electronic device; and recording the user identity authentication success event in the first list in a carried state.

According to the third aspect or any implementation of the third aspect, when the processor reads the computer instructions from the memory, the electronic device is further enabled to perform the following: clearing, when it is determined that the carried state is exited, the user identity authentication success event recorded in the first list; and sending a first state invalidity notification to the first electronic device, where the first state invalidity notification indicates that the second electronic device is in the second state.

According to the third aspect or any implementation of the third aspect, when the processor reads the computer instructions from the memory, the electronic device is further enabled to perform the following: receiving a trusted holding device addition request from the first electronic device; and sending device information to the first electronic device, where the device information is used to add the second electronic device as a trusted holding device of the first electronic device; and receiving a trusted holding device addition response from the first electronic device, and determining to become the trusted holding device of the first electronic device.

According to the third aspect or any implementation of the third aspect, the device information includes one or more of the following: identity authentication capability information supported by the second electronic device, a ranging manner supported by the second electronic device, a security capability level credential of the second electronic device, and device identity credential information.

According to the third aspect or any implementation of the third aspect, the second electronic device is in the carried state. When the processor reads the computer instructions from the memory, the electronic device is further enabled to perform the following: in the second state, receiving a first user identity authentication success event from the first electronic device, where the first user identity authentication success event is the user identity authentication success event detected by the first electronic device; and switching the second state to the first state.

According to the third aspect or any implementation of the third aspect, the authentication request carries a service constraint condition, and the service constraint condition includes one or more of the following: the first authentication trust level requirement, a user identity confirmation time requirement, a user identity confirmation manner requirement, a user identity confirmation device requirement, an available user confirmation identifier, and a real-time authentication trigger identifier.

For technical effect corresponding to the third aspect and any implementation of the third aspect, refer to the technical effect corresponding to the first aspect and any implementation of the first aspect. Details are not described herein again.

According to a fourth aspect, an electronic device is provided. The electronic device includes a processor and a memory. The memory is coupled to the processor. The memory is configured to store computer program code. The computer program code includes computer instructions. When the processor reads the computer instructions from the memory, the electronic device is enabled to perform the following: sending an authentication request to a second electronic device in response to a user identity authentication request of a first service in a first electronic device, where a short-range communication connection is established between the first electronic device and the second electronic device, an authentication trust level supported by the second electronic device meets a first authentication trust level requirement, and the first authentication trust level requirement is a lowest authentication trust level required by the first service; receiving a first authentication result from the second electronic device, where the first authentication result is an authentication result that is obtained by the second electronic device in a first state through matching in a first list, the first list includes at least one of a first event or a second event, the first event is a local user identity authentication success event monitored by the second electronic device, and the second event is a user identity authentication success event from the first electronic device; and determining a second authentication result based on the first authentication result, where the second authentication result indicates whether trusted authentication of the second electronic device succeeds.

According to the fourth aspect, when the processor reads the computer instructions from the memory, the electronic device is further enabled to perform the following: receiving a third authentication result from the second electronic device, where the third authentication result is an authentication result generated by the second electronic device in a second state through real-time authentication; and determining the second authentication result based on the third authentication result.

According to the fourth aspect or any implementation of the fourth aspect, determining the second authentication result based on the first authentication result includes: detecting that the first authentication result is a non-real-time authentication result, and performing ranging on the second electronic device, to generate a ranging result; and when the ranging result meets a preset distance requirement, determining a first ranging security level of the second electronic device, and adjusting, based on the first ranging security level, a first authentication trust level carried in the first authentication result, to determine the second authentication result, where the second authentication result includes a second authentication trust level.

According to the fourth aspect or any implementation of the fourth aspect, when the second authentication trust level meets the first authentication trust level requirement, the second authentication result indicates that the trusted authentication of the second electronic device succeeds.

According to the fourth aspect or any implementation of the fourth aspect, when the processor reads the computer instructions from the memory, the electronic device is further enabled to perform the following: sending a user confirmation request to the second electronic device when the second authentication trust level does not meet the first authentication trust level requirement; receiving a confirmation result from the second electronic device, where the confirmation result is a result determined by the second electronic device based on a user operation; and determining the second authentication result in response to receiving the confirmation result.

According to the fourth aspect or any implementation of the fourth aspect, determining the second authentication result in response to receiving the confirmation result includes: matching a corresponding second ranging security level based on a manner of receiving the confirmation result; and determining the second authentication result based on the second ranging security level.

According to the fourth aspect or any implementation of the fourth aspect, adjusting, based on the first ranging security level, the first authentication trust level carried in the first authentication result includes: obtaining first information, where the first information includes a security level of a trusted relationship between the first electronic device and the second electronic device, a security level of first state maintenance of the second electronic device, a security level of carried state detection of the second electronic device, and the first ranging security level; and determining a security capability level of the second electronic device based on the first information. When the security capability level is a high level, the second authentication trust level is equal to the first authentication trust level. When the security capability level is a medium level, the second authentication trust level is lower than the first authentication trust level. When the security capability level is a low level, the second authentication trust level is a level 0 or a level 1.

According to the fourth aspect or any implementation of the fourth aspect, when the processor reads the computer instructions from the memory, the electronic device is further enabled to perform the following: sending a trusted holding device addition request to the second electronic device; receiving device information from the second electronic device, where the device information is information determined by the second electronic device in response to receiving the trusted holding device addition request; and adding the second electronic device as a trusted holding device based on the device information.

According to the fourth aspect or any implementation of the fourth aspect, the device information includes one or more of the following: identity authentication capability information supported by the second electronic device, a ranging manner supported by the second electronic device, a security capability level credential of the second electronic device, and device identity credential information.

According to the fourth aspect or any implementation of the fourth aspect, the authentication request carries a service constraint condition, and the service constraint condition includes one or more of the following: the first authentication trust level requirement, a user identity confirmation time requirement, a user identity confirmation manner requirement, a user identity confirmation device requirement, an available user confirmation identifier, and a real-time authentication trigger identifier.

According to the fourth aspect or any implementation of the fourth aspect, the method further includes: detecting a first user identity authentication success event; and sending the first user identity authentication success event to the second electronic device.

For technical effects corresponding to the fourth aspect and any implementation of the fourth aspect, refer to the technical effects corresponding to the second aspect and any implementation of the second aspect. Details are not described herein again.

According to a fifth aspect, an authentication system is provided. The system includes a first electronic device and a second electronic device, and a short-range communication connection is established between the first electronic device and the second electronic device. The first electronic device is configured to send an authentication request to the second electronic device in response to a user identity authentication request of a first service in the first electronic device, where an authentication trust level supported by the second electronic device meets a first authentication trust level requirement, and the first authentication trust level requirement is a lowest authentication trust level of the first service; receive a first authentication result from the second electronic device; and determine a second authentication result based on the first authentication result, where the second authentication result indicates whether trusted authentication of the second electronic device succeeds. The second electronic device is configured to: when the second electronic device is in a first state, match the first authentication result corresponding to the authentication request in a first list, where the first list includes at least one of a first event or a second event, the first event is a local user identity authentication success event monitored by the second electronic device, and the second event is a user identity authentication success event from the first electronic device; and send the first authentication result to the first electronic device.

According to the fifth aspect, the second electronic device is further configured to perform real-time authentication in a second state, to generate a third authentication result; and send the third authentication result to the first electronic device. The first electronic device is further configured to: receive the third authentication result from the second electronic device; and detect that the third authentication result is a real-time authentication result, and determine the second authentication result based on the third authentication result.

According to the fifth aspect or any implementation of the fifth aspect, the first electronic device is further configured to: detect that the first authentication result is a non-real-time authentication result, perform ranging on the second electronic device, to generate a ranging result, and determine a first ranging security level of the second electronic device; and when the ranging result meets a preset distance requirement, adjust, based on the first ranging security level, a first authentication trust level carried in the first authentication result, to generate the second authentication result, where the second authentication result includes a second authentication trust level, and when the second authentication trust level meets the first authentication trust level requirement, the second authentication result indicates that the trusted authentication of the second electronic device succeeds.

According to the fifth aspect or any implementation of the fifth aspect, the first electronic device is further configured to: send a user confirmation request to the second electronic device when the second authentication trust level does not meet the first authentication trust level requirement. The second electronic device is further configured to: receive the user confirmation request from the first electronic device; in response to receiving a user confirmation request, obtain a confirmation result based on a user operation; and send the confirmation result to the first electronic device. The first electronic device is further configured to: receive the confirmation result from the second electronic device; and determine the second authentication result in response to receiving the confirmation result.

According to the fifth aspect or any implementation of the fifth aspect, the second electronic device is further configured to: obtain a user identity authentication success event, and record the user identity authentication success event in the first list in a carried state, where the user identity authentication success event is from at least one of the second electronic device or the first electronic device; and when it is determined that the carried state is exited, clear the user identity authentication success event recorded in the first list.

For technical effect corresponding to the fifth aspect and any implementation of the fifth aspect, refer to the technical effect corresponding to the first aspect and any implementation of the first aspect. Details are not described herein again.

According to a sixth aspect, an electronic device is provided. The electronic device has a function of implementing the authentication method according to the first aspect and any possible implementation of the first aspect. Alternatively, the electronic device has a function of implementing the authentication method according to the second aspect and any possible implementation of the second aspect. The function may be implemented by hardware, or may be implemented by hardware executing corresponding software. The hardware or the software includes one or more modules corresponding to the function.

For technical effect corresponding to the sixth aspect and any implementation of the sixth aspect, refer to the technical effect corresponding to the first aspect and any implementation of the first aspect. Details are not described herein again.

According to a seventh aspect, a computer-readable storage medium is provided. The computer-readable storage medium stores a computer program (which may also be referred to as instructions or code). When the computer program is executed by an electronic device, the electronic device is enabled to perform the method according to the first aspect or any implementation of the first aspect, or the electronic device is enabled to perform the method according to the second aspect or any implementation of the second aspect.

For technical effects corresponding to the seventh aspect and any implementation of the seventh aspect, refer to technical effects corresponding to the first aspect and any implementation of the first aspect. Details are not described herein again.

According to an eighth aspect, a computer program product is provided. When the computer program product runs on an electronic device, the electronic device is enabled to perform the method according to any one of the first aspect or the implementations of the first aspect, or the electronic device is enabled to perform the method according to any one of second aspect or the implementations of the second aspect.

For technical effect corresponding to the eighth aspect and any implementation of the eighth aspect, refer to the technical effect corresponding to the first aspect and any implementation of the first aspect. Details are not described herein again.

According to a ninth aspect, a circuit system is provided. The circuit system includes a processing circuit. The processing circuit is configured to perform the method according to any one of the first aspect or the implementations of the first aspect, or the processing circuit is configured to perform the method according to any one of second aspect or the implementations of the second aspect.

For technical effect corresponding to the ninth aspect and any implementation of the ninth aspect, refer to the technical effect corresponding to the first aspect and any implementation of the first aspect. Details are not described herein again.

According to a tenth aspect, a chip system is provided, including at least one processor and at least one interface circuit. The at least one interface circuit is configured to: perform a transceiver function; and send instructions to the at least one processor. When the at least one processor executes the instructions, the at least one processor performs the method according to any one of the first aspect or the implementations of the first aspect; or the at least one processor performs the method according to any one of the second aspect or the implementations of the second aspect.

For technical effect corresponding to the tenth aspect and any implementation of the tenth aspect, refer to technical effect corresponding to the first aspect and any implementation of the first aspect. Details are not described herein again.

### BRIEF DESCRIPTION OF DRAWINGS

FIG. 1 is a schematic flowchart of an authentication method according to this application;
FIG. 2 is a diagram of a communication system to which an authentication method is applied according to this application;
FIG. 3 is a diagram of a hardware structure of a first electronic device according to this application;
FIG. 4 is a block diagram of a software structure of a first electronic device according to this application;
FIG. 5 is a schematic flowchart of an authentication method in a trusted holding device addition phase according to this application;
FIG. 6(a) to FIG. 6(d) are diagrams of interfaces of adding a trusted holding device according to this application;
FIG. 7 is a diagram of a scenario in which different authentication trust levels of a same trusted holding device are triggered in different authentication manners according to this application;
FIG. 8 is a diagram of a scenario in which an authentication device can add a plurality of trusted holding devices that support different authentication trust levels according to this application;
FIG. 9 is a schematic flowchart of an authentication method for maintaining an identity authentication success event by a trusted holding device according to this application;
FIG. 10 is a diagram of a scenario in which a trusted holding device restores an authentication trust status according to this application;
FIG. 11 is a diagram of a scenario in which an authentication trust level supported by a trusted holding device changes according to this application;
FIG. 12A and FIG. 12B are a schematic flowchart of an authentication method in an authentication phase of a trusted holding device according to this application;
FIG. 13 is a diagram of a scenario in which an authentication device can perform an operation based on an authentication trust level supported by a trusted holding device according to this application;
FIG. 14 is a diagram of a scenario of triggering real-time user authentication according to this application;
FIG. 15 is a diagram of a scenario of user-unaware authentication according to this application;
FIG. 16 is a diagram 1 of a scenario of triggering user confirmation according to this application;
FIG. 17 is a diagram 2 of a scenario of triggering user confirmation according to this application;
FIG. 18 is a schematic flowchart of an authentication method according to this application;
FIG. 19 is a diagram of a structure of a first electronic device according to this application; and
FIG. 20 is a diagram of a structure of a second electronic device according to this application.

### DESCRIPTION OF EMBODIMENTS

The following describes the technical solutions in embodiments of this application with reference to the accompanying drawings in embodiments of this application. In the descriptions of embodiments of this application, terms used in the following embodiments are merely intended to describe purposes of specific embodiments, but are not intended to limit this application. The terms "one", "a", "the", "the foregoing", "this", and "the one" of singular forms used in this specification and the appended claims of this application are intended to include expressions such as "one or more", unless otherwise specified in the context clearly. It should be further understood that, in the following embodiments of this application, "at least one" and "one or more" mean one or more (including two).

Reference to "an embodiment", "some embodiments", or the like described in this specification indicates that one or more embodiments of this application include specific features, structures, or characteristics described with reference to the embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner. The term "connection" includes direct connection and indirect connection, unless otherwise specified. "First" and "second" are merely intended for a purpose of description, and shall not be understood as an indication or implication of relative importance or implicit indication of a quantity of indicated technical features.

In embodiments of this application, words such as "example" or "for example" represent giving examples, illustrations, or descriptions. Any embodiment or design scheme described as an "example" or "for example" in embodiments of this application should not be construed as being more preferred or more advantageous than another embodiment or design scheme. Exactly, use of the term "example", "for example", or the like is intended to present a related concept in a specific manner.

In some embodiments, with development of terminal technologies, some electronic devices support user identity authentication through a trusted holding device. For example, a watch is a trusted holding device of a mobile phone. Within a period of time after a user manually unlocks the watch, when the user wears the watch and approaches the mobile phone, an authentication trusted state of the watch can directly authorize the mobile phone to be unlocked. The user does not need to unlock the mobile phone through password authentication, facial recognition or the like, thereby improving use convenience of the user.

Optionally, a device on which user identity authentication needs to be performed may be described as an authentication device, and a device that performs user identity authentication on the authentication device may be described as a trusted holding device. It should be understood that the authentication device may also be described as a to-be-authenticated device, a device that requests user identity authentication, or the like, and the trusted holding device may also be described as a trusted device, or the like. This is not limited in embodiments of this application, and details are not described below.

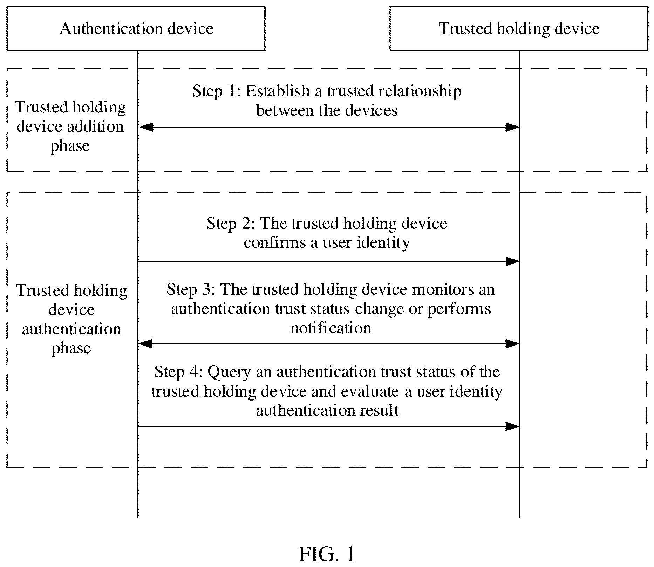

For example, as shown in FIG. 1, before performing user identity authentication through the trusted holding device, the authentication device needs to first perform a trusted holding device addition phase. In this phase, the authentication device establishes a trusted relationship with the trusted holding device, so that the trusted holding device can be used as a valid credential for proving an owner identity of the authentication device (namely, step 1). For example, the authentication device needs to log in to a same account as the trusted holding device to establish a trusted connection, and the trusted holding device needs to set a password. Then, the authentication device determines that the trusted holding device is added.

After the trusted holding device is added to the authentication device, a trusted holding device authentication phase may be performed. The trusted holding device is usually a portable accessory, like a watch or a band, and is prone to being lost. To prevent another user from passing user identity authentication of the authentication device through the trusted holding device after the trusted holding device is lost, the trusted holding device needs to confirm a user identity. For example, the trusted holding device is unlocked when a user holds or wears the trusted holding device, and it is determined that the user holding or wearing the trusted holding device is an owner (namely, step 2). After the trusted holding device confirms the user identity, the trusted holding device is in an authentication trusted state. When the trusted holding device cannot determine the user identity, the trusted holding device is in an authentication untrusted state. If the trusted holding device is in the authentication untrusted state, user identity confirmation of the authentication device cannot be completed.

It can be learned that the trusted holding device supports only two states: the authentication trusted state and the authentication untrusted state. The authentication trust status is simple, which can support only a specific service scenario. For example, after entering the authentication trusted state, the trusted holding device may support an unlocking service of the authentication device; and after entering the authentication untrusted state, the trusted holding device cannot support the unlocking service.

In addition, some devices have low device performance and are not configured with a password authentication function. Therefore, these devices cannot be used as trusted holding devices, affecting use of the user. For example, a weak-capability band or headset cannot be used as a trusted holding device.

Optionally, the trusted holding device monitors an authentication trust status of the trusted holding device, and notifies the authentication device when the authentication trust status changes (namely, step 3). For example, after determining that the user exits a holding or wearing state, the trusted holding device enters the authentication untrusted state, and sends a notification to the authentication device, to indicate the authentication untrusted state of the current trusted holding device.

In a user identity authentication phase, the authentication device queries an authentication trust status of the trusted holding device, to evaluate a user identity authentication result (namely, step 4). For example, if the authentication device finds that the trusted holding device is in the authentication trusted state, user identity authentication succeeds, and a corresponding service may be executed. For example, a user identity authentication procedure of the authentication device triggers an unlocking function, and the authentication device may be unlocked after user identity authentication succeeds. For another example, the authentication device determines that the trusted holding device is in an authentication untrusted state, and cannot execute a corresponding service. The user can perform a user identity authentication operation on the authentication device again, for example, enter a password on the authentication device.

Optionally, after determining that the trusted holding device is in the authentication trusted state, the authentication device further needs to determine whether a distance between the trusted holding device and the authentication device is within a preset range, to reduce an uncontrollable risk. For example, a distance between the trusted holding device and the authentication device needs to be within 2 meters during user identity authentication through the trusted holding device.

It can be learned that the user needs to hold or wear and unlock the trusted holding device, so that the trusted holding device can enter the authentication trusted state. However, once the user exits a holding or wearing state of the trusted holding device, the trusted holding device enters the authentication untrusted state. The user needs to hold or wear and unlock the trusted holding device again, so that the trusted holding device can enter the authentication trusted state again. User operations are complex.

In addition, when the trusted holding device is in the authentication untrusted state, or the trusted holding device is in the authentication trusted state but a distance between the trusted holding device and the authentication device exceeds the preset range, user identity authentication of the authentication device cannot be supported. In this case, the user can use a corresponding function of the authentication device only by performing an operation on the authentication device, affecting use of the user.

In addition, some devices have low device performance, are not configured with capabilities such as high-precision ranging and wearing detection, and cannot be used as trusted holding devices.

Therefore, according to the authentication method provided in embodiments of this application, user identity authentication is adaptively completed based on a user identity authentication success event that is locally recorded in the trusted holding device or that is sent by the authentication device, to improve use convenience of the user.

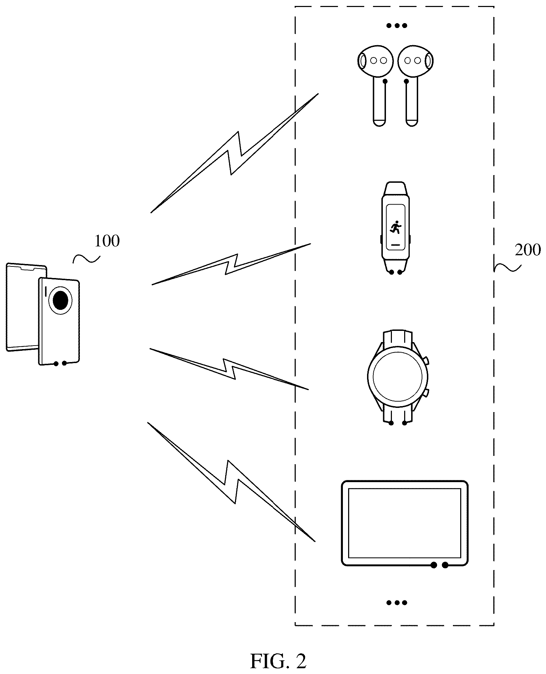

For example, FIG. 2 is a diagram of a communication system to which an authentication method is applied according to an embodiment of this application. As shown in FIG. 2, the communication system includes a first electronic device 100 and a second electronic device 200.

Optionally, the first electronic device 100 is, for example, an authentication device on which user identity authentication needs to be performed. The first electronic device 100 may be, for example, a terminal device like a mobile phone, a tablet computer, a notebook computer, a smart screen, a wearable device, a vehicle-mounted terminal, an ultra-mobile personal computer (ultra-mobile personal computer, UMPC), a netbook, a personal digital assistant (personal digital assistant, PDA), or an artificial intelligence (artificial intelligence, AI) device. An operating system installed on the first electronic device 100 includes but is not limited to iOS^{®}, Android^{®}, HarmonyOS^{®}, Windows^{®}, Linux^{®}, or another operating system. A specific type of the first electronic device 100 and the installed operating system are not limited in this application.

Optionally, the second electronic device 200 is, for example, a trusted holding device that performs user identity authentication on the first electronic device 100. The second electronic device 200 may be, for example, a terminal device like a wearable device (like a watch, a band, or a headset), a mobile phone, a tablet computer, a notebook computer, an ultra-mobile personal computer (ultra-mobile personal computer, UMPC), a netbook, a personal digital assistant (personal digital assistant, PDA), or an artificial intelligence (artificial intelligence, AI) device. An operating system installed on the second electronic device 200 includes but is not limited to iOS^{®}, Android^{®}, HarmonyOS^{®}, Windows^{®}, Linux^{®}, or another operating system. A specific type of the second electronic device 200 and the installed operating system are not limited in this application.

In some embodiments, a wireless communication connection is established between the first electronic device 100 and the second electronic device 200. A wireless communication technology for establishing a wireless communication connection includes but is not limited to at least one of the following: Bluetooth (Bluetooth, BT) (for example, conventional Bluetooth or Bluetooth low energy (Bluetooth low energy, BLE) Bluetooth), a wireless local area network (wireless local area network, WLAN) (for example, a wireless fidelity (wireless fidelity, Wi-Fi) network), near field communication (near field communication, NFC), Zigbee (Zigbee), frequency modulation (frequency modulation, FM), infrared (infrared, IR), and the like.

Optionally, a communication connection may alternatively be established between the first electronic device 100 and the second electronic device 200 through a third-party device in a local area network. The third-party device is, for example, a router, a gateway, a smart device controller, or a server.

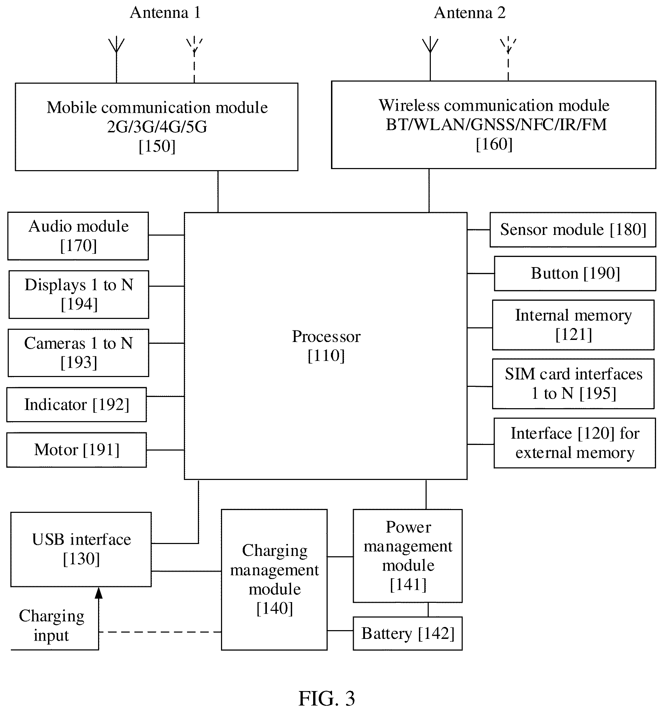

Optionally, the first electronic device 100 and the second electronic device 200 in embodiments of this application may be implemented by using different devices, and the different devices may have same, similar, or different hardware structures, for example, a hardware structure shown in FIG. 3.

For example, an example in which the first electronic device 100 has the hardware structure shown in FIG. 3 is used to describe the hardware structure shown in FIG. 3.

As shown in FIG. 3, the first electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a sensor module 180, a button 190, a motor 191, an indicator 192, a camera 193, a display 194, a subscriber identity module (subscriber identification module, SIM) card interface 195, and the like.

It may be understood that the structure shown in this embodiment of this application does not constitute a specific limitation on the first electronic device 100. In some other embodiments of this application, the first electronic device 100 may include more or fewer components than those shown in the figure, or a combination of a part of the components, or splits from a part of the components, or an arrangement of different components. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), or the like. Different processing units may be independent components, or may be integrated into one or more processors.

The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, or the like.

The I2C interface is a bidirectional synchronous serial bus, and includes one serial data line (serial data line, SDA) and one serial clock line (serial clock line, SCL). In some embodiments, the processor 110 may include a plurality of groups of I2C buses. The processor 110 may be separately coupled to the touch sensor, a charger, a flash, the camera 193, and the like by using different I2C bus interfaces. For example, the processor 110 may be coupled to the touch sensor through the I2C interface, so that the processor 110 communicates with the touch sensor through the I2C bus interface, to implement a touch function of the first electronic device 100.

The MIPI interface may be configured to connect the processor 110 to peripheral devices such as the display 194 and the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the first electronic device 100. The processor 110 communicates with the display 194 through the DSI interface, to implement a display function of the first electronic device 100.

The USB interface 130 is an interface that conforms to a USB standard specification, and may be specifically a mini USB interface, a micro USB interface, a USB Type-C interface, or the like. The USB interface 130 may be configured to connect to a charger to charge the first electronic device 100, or may be configured to transmit data between the first electronic device 100 and a peripheral device, or may be configured to connect to a headset, to play audio through the headset. The interface may be further configured to connect to another first electronic device, for example, an AR device.

It may be understood that, an interface connection relationship between the modules shown in this embodiment of this application is merely an example for description, and does not constitute a structural limitation on the first electronic device 100. In some other embodiments of this application, the first electronic device 100 may alternatively use an interface connection mode different from that in the foregoing embodiment, or use a combination of a plurality of interface connection modes.

The charging management module 140 is configured to receive a charging input from a charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the first electronic device 100. The charging management module 140 may further supply power to the first electronic device through the power management module 141 while charging the battery 142.

The power management module 141 is configured to connect to the battery 142, the charging management module 140, and the processor 110. The power management module 141 receives an input from the battery 142 or the charging management module 140, and supplies power to the processor 110, the internal memory 121, the display 194, the camera 193, the wireless communication module 160, and the like. The power management module 141 may be further configured to monitor parameters such as a battery capacity, a quantity of battery cycles, and a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the first electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the first electronic device 100 may be configured to cover one or more communication bands. Different antennas may further be reused, to improve antenna utilization. For example, the antenna 1 may be reused as a diversity antenna of a wireless local area network. In some other embodiments, the antenna may be used in combination with a tuning switch.

The mobile communication module 150 can provide a wireless communication solution that is applied to the first electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device, or displays an image or a video through the display 194. In some embodiments, the modem processor may be an independent device. In some other embodiments, the modem processor may be independent of the processor 110, and is disposed in a same device as the mobile communication module 150 or another functional module.

The wireless communication module 160 may provide a wireless communication solution that is applied to the first electronic device 100, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more devices integrating at least one communication processor module. The wireless communication module 160 receives an electromagnetic wave by the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the first electronic device 100, the antenna 1 and the mobile communication module 150 are coupled, and the antenna 2 and the wireless communication module 160 are coupled, so that the first electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), or a satellite based augmentation system (satellite based augmentation system, SBAS).

The first electronic device 100 implements a display function via the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be made of a liquid crystal display (liquid crystal display, LCD), for example, an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, or a quantum dot light-emitting diode (quantum dot light-emitting diode, QLED). In some embodiments, the first electronic device 100 may include one or N displays 194, where N is a positive integer greater than 1.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The light-sensitive element converts an optical signal into an electrical signal, and then transmits the electrical signal to the ISP to convert the electrical signal into a digital image signal. The ISP outputs the digital image signal to a DSP for processing. The DSP converts the digital image signal into an image signal in a standard format such as RGB or YUV. In some embodiments, the first electronic device 100 may include one or N cameras 193, where N is a positive integer greater than 1.

The interface 120 for external memory may be configured to connect to an external memory card, for example, a micro SD card, to expand a storage capability of the first electronic device 100. The external memory card communicates with the processor 110 through the interface 120 for external memory, to implement a data storage function. For example, files such as music and video are stored in the external memory card.

The internal memory 121 may be configured to store computer-executable program code, and the executable program code includes instructions. The internal memory 121 may include a program storage area and a data storage area. The program storage area may store an operating system, an application required by at least one function (for example, a voice playing function or an image playing function), and the like. The data storage area may store data (for example, audio data and an address book) and the like created in a process of using the first electronic device 100. In addition, the internal memory 121 may include a high speed random access memory, and may further include a nonvolatile memory, for example, at least one magnetic disk storage device, a flash storage device, or a universal flash memory (universal flash storage, UFS). The processor 110 runs instructions stored in the internal memory 121 or instructions stored in the memory disposed in the processor, to perform various function applications of the first electronic device 100 and data processing.

The audio module 170 is configured to convert a digital audio signal into an analog audio signal for output, and is also configured to convert an analog audio input into a digital audio signal. The audio module 170 may be further configured to encode and decode an audio signal. In some embodiments, the audio module 170 may be disposed in the processor 110, or some functional modules in the audio module 170 are disposed in the processor 110. The first electronic device 100 may use the audio module 170 to implement music playing, recording, and the like. The audio module 170 may include a speaker, a receiver, a microphone, a headset jack, an application processor, and the like, to implement an audio function.

The sensor module 180 may include a pressure sensor, a gyroscope sensor, a barometric pressure sensor, a magnetic sensor, an acceleration sensor, a range sensor, an optical proximity sensor, a fingerprint sensor, a temperature sensor, a touch sensor, an ambient light sensor, a bone conduction sensor, and the like.

The button 190 includes a power button, a volume button, and the like. The button 190 may be a mechanical button, or may be a touch button. The first electronic device 100 may receive a button input, and generate a button signal input related to a user setting and function control of the first electronic device 100.

The motor 191 may generate a vibration prompt. The motor 191 may be configured to provide an incoming call vibration prompt and a touch vibration feedback.

The indicator 192 may be an indicator light, and may indicate a charging status and a power change, or may be configured to indicate a message, a missed call, a notification, and the like.

The SIM card interface 195 is configured to connect to a SIM card. The first electronic device 100 may support one or N SIM card interfaces, where N is a positive integer greater than 1.

A software system of the first electronic device 100 or the second electronic device 200 may use a layered architecture, an event-driven architecture, a microkernel architecture, a microservice architecture, or a cloud architecture. In embodiments of this application, an Android system with a layered architecture is used as an example to describe a software structure of the first electronic device 100 or the second electronic device 200.

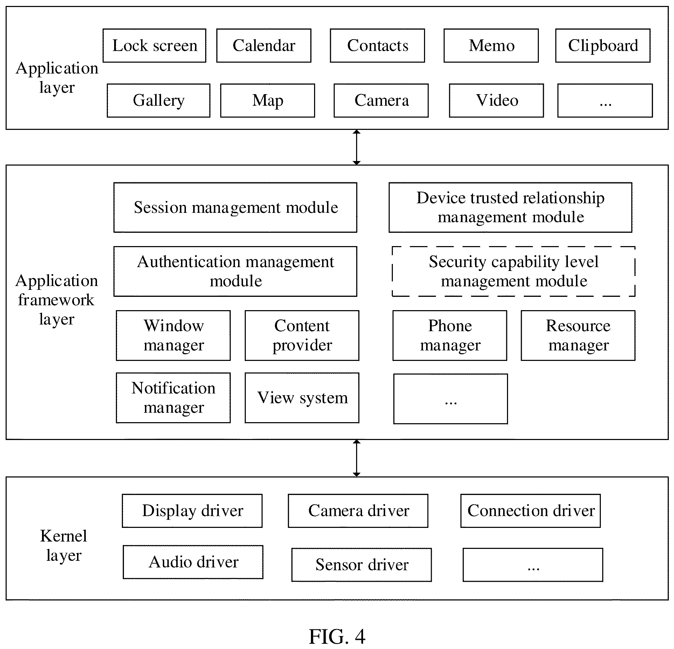

FIG. 4 is a block diagram of the software structure of the first electronic device 100 according to an embodiment of this application. The second electronic device 200 may have a same, similar, or different software structure.

In a layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 4, the application package may include applications such as Lock screen, Calendar, Contacts, Memo, Clipboard, Gallery, Map, Camera, and Video.

The application framework layer provides an application programming interface (application programming interface, API) and a programming framework for the application at the application layer. The application framework layer includes some predefined functions.

As shown in FIG. 4, the application framework layer may include a session management module, a device trusted relationship management module, an authentication management module, a window manager, a content provider, a view system, a phone manager, a resource manager, a notification manager, and the like.

The session management module is configured to establish a communication channel with a peer device. In some examples, the first electronic device 100 and the second electronic device 200 establish a trusted communication channel through the session management module, and perform key agreement through the communication channel, to ensure subsequent session security.

The device trusted relationship management module is configured to maintain a device trusted relationship between the first electronic device 100 and the second electronic device 200, and store device information of the peer device, for example, a security capability level of a trusted holding device. For details about the security capability level of the trusted holding device, refer to the following description. Details are not described herein again.

Optionally, an electronic device (for example, the first electronic device 100 or the second electronic device 200) may be used as an authentication device, or may be used as a trusted holding device. For example, a mobile phone may be used as an authentication device to be unlocked by a watch, or the mobile phone may be used as a trusted holding device to unlock a notebook computer.

Optionally, when the electronic device (for example, the first electronic device 100 or the second electronic device 200) is used as an authentication device, information about one or more trusted holding devices is stored through the device trusted relationship management module.

Optionally, when the electronic device (for example, the first electronic device 100 or the second electronic device 200) is used as a trusted holding device, information about one or more authentication devices is stored through the device trusted relationship management module. In addition, in a trusted holding device addition phase, the electronic device sends information such as an authentication trust level of the electronic device to the authentication device.

The authentication management module is configured to manage an authentication relationship between the first electronic device 100 and the second electronic device 200 and an authentication trust status.

Optionally, after the trusted holding device is added, the trusted holding device (for example, the second electronic device 200) monitors a local user identity authentication success event, and records the user identity authentication success event through the authentication management module.

Optionally, after the trusted holding device is added, the authentication device (for example, the first electronic device 100) sends a user identity authentication success event to the trusted holding device (for example, the second electronic device 200) after detecting a local user identity authentication success event. Correspondingly, the trusted holding device receives the user identity authentication success event sent by the authentication device, and records the user identity authentication success event through the authentication management module.

Optionally, in a trusted holding device authentication phase, after receiving an authentication request sent by the authentication device (for example, the first electronic device 100), the trusted holding device (for example, the second electronic device 200) matches a suitable authentication trust level based on the user identity authentication success event recorded in the authentication management module, to send an authentication result to the authentication device. For example, the authentication management module stores a user identity authentication success event in which the user unlocks the trusted holding device through a password, and an authentication trust level corresponding to the user identity authentication success event is ATL 3. In this case, the trusted holding device subsequently responds to the authentication request, and a matched authentication trust level may be ATL 3. For a specific matching method, refer to the following descriptions. Details are not described herein again.

Optionally, in the trusted holding device authentication phase, after receiving the authentication result sent by the trusted holding device (for example, the second electronic device 200), the authentication device (for example, the first electronic device 100) may further evaluate the authentication result through the authentication management module, for example, determine whether the authentication result indicates that authentication succeeds, whether user re-confirmation is required, and whether ranging needs to be performed.

In some examples, when the electronic device is the trusted holding device, the electronic device may further include a security capability level management module. The security capability level management module is configured to evaluate a security capability level of the electronic device, for example, including three levels: high, medium, and low. The trusted holding device may further send the security capability level to the authentication device, and the authentication device verifies the security capability of the trusted holding device.

Optionally, the security capability level management module evaluates the security capability level of the trusted holding device based on one or more of the following: a security level of a trusted relationship between the authentication device and the trusted holding device, a security level of trust status maintenance, a security level of holding status detection, and a ranging security level. For a specific evaluation manner, refer to descriptions of corresponding locations below. Details are not described herein again.

Optionally, after receiving the authentication result sent by the trusted holding device, the authentication device may determine, based on the security capability level of the trusted holding device, whether the authentication trust level carried in the authentication result needs to be corrected. For example, if the authentication trust level carried in the authentication result is ATL 3, but the authentication device determines that the security capability level of the trusted holding device is a medium level, the authentication device may determine that the authentication trust level of the trusted holding device in this user identity authentication is ATL 2, that is, degradation is performed, to avoid impact on reliability of user identity authentication of the authentication device due to the authentication result confirmed by the trusted holding device with a low security capability level.

The window manager is used to manage a window program. The window manager may obtain a size of the display, determine whether there is a status bar, perform screen locking, take a screenshot, and the like.

The content provider is configured to: store and obtain data, and enable the data to be accessed by an application program. The data may include a video, an image, audio, calls that are made and received, a browsing history, a bookmark, a phone book, and the like.

The view system includes visual controls such as a control for displaying a text and a control for displaying an image. The view system may be configured to construct an application program. A display interface may include one or more views. For example, a display interface including an SMS message notification icon may include a text display view and an image display view.

The phone manager is configured to provide a communication function for the first electronic device 100, for example, management of a call status (including answering, declining, or the like).

The resource manager provides various resources such as a localized character string, an icon, an image, a layout file, and a video file for an application.

The notification manager enables an application to display notification information in a status bar, and may be used to convey a notification type message. The message may automatically disappear after a short pause without user interaction. The notification manager may alternatively be a notification that appears in a top status bar of the system in a form of a graph or a scroll bar text.

The Android runtime includes a core library and a virtual machine. The Android runtime is responsible for scheduling and management of the Android system.

The core library includes two parts: a function that needs to be called in java language and a core library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Libraries), a three-dimensional graphics processing library (for example, OpenGL ES), and a two-dimensional graphics engine (for example, SGL).

The surface manager is used to manage a display subsystem and provide fusion of 2D and 3D layers for a plurality of applications.

The media library supports playback and recording in a plurality of commonly used audio and video formats, and static image files. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The two-dimensional graphics engine is a drawing engine for two-dimensional drawing.

The kernel layer is a layer between hardware and software. The kernel layer includes at least a display driver, a camera driver, an audio driver, a sensor driver, and a connection driver. Optionally, the connection driver is configured to trigger establishment of a communication connection with a peer device.

In some embodiments, if the authentication device needs to perform user identity authentication through the trusted holding device, an electronic device needs to be first added as the trusted holding device. The following describes a trusted holding device addition phase.

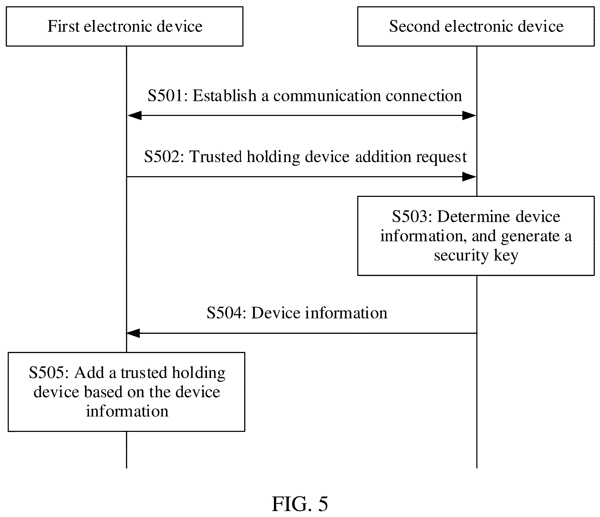

For example, FIG. 5 is a schematic flowchart of an authentication method in a trusted holding device addition phase according to an embodiment of this application. It should be noted that the method is not limited to a specific sequence described in FIG. 5 and below. It should be understood that, in another embodiment, sequences of some steps in the method may be exchanged based on an actual requirement, or some steps in the method may be omitted or deleted. The method includes the following steps.

S501: A first electronic device establishes a communication connection to a second electronic device.

The first electronic device is an electronic device to which a trusted holding device is to be added, and the second electronic device is an electronic device that is to become a trusted holding device of the first electronic device.

In some embodiments, the first electronic device and the second electronic device may establish an inter-device mutual-trusted relationship in a plurality of manners such as Bluetooth pairing, Wi-Fi pairing, code scanning and binding, and logging in to a same account. Based on the mutual trusted relationship, the first electronic device and the second electronic device may establish a secure communication connection.

Optionally, the communication connection established between the first electronic device and the second electronic device is, for example, a Bluetooth connection or a Wi-Fi connection.

S502: The first electronic device sends a trusted holding device addition request to the second electronic device.

In some embodiments, the first electronic device triggers, in response to a user operation, a procedure of adding a trusted holding device. Then, the first electronic device displays a plurality of electronic devices that have established a communication connection, and sends the trusted holding device addition request to an electronic device selected by a user based on the user operation, to add the electronic device as the trusted holding device. Correspondingly, the second electronic device receives the trusted holding device addition request sent by the first electronic device.

Optionally, the trusted holding device addition request carries device information of the first electronic device. The device information includes, for example, a device name, a device identifier, a device type, and device identity credential information of the first electronic device. The device identity credential information is, for example, a public key, and is used to subsequently generate a security key for communication between the first electronic device and the second electronic device.

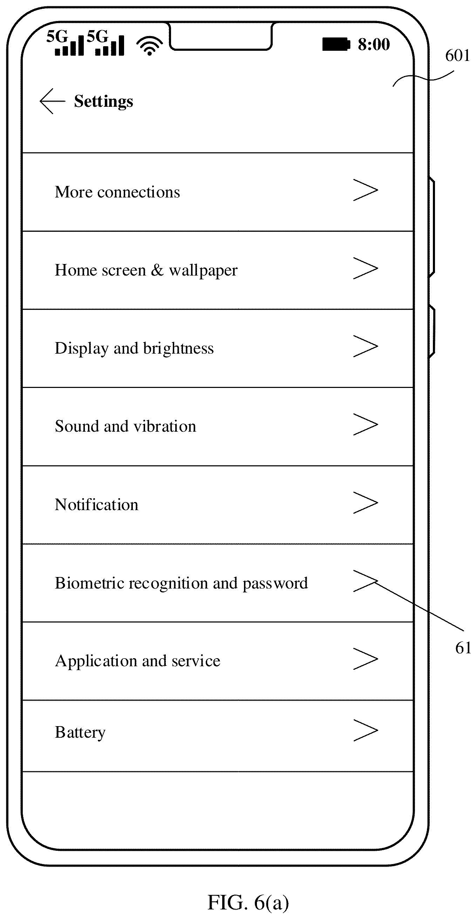

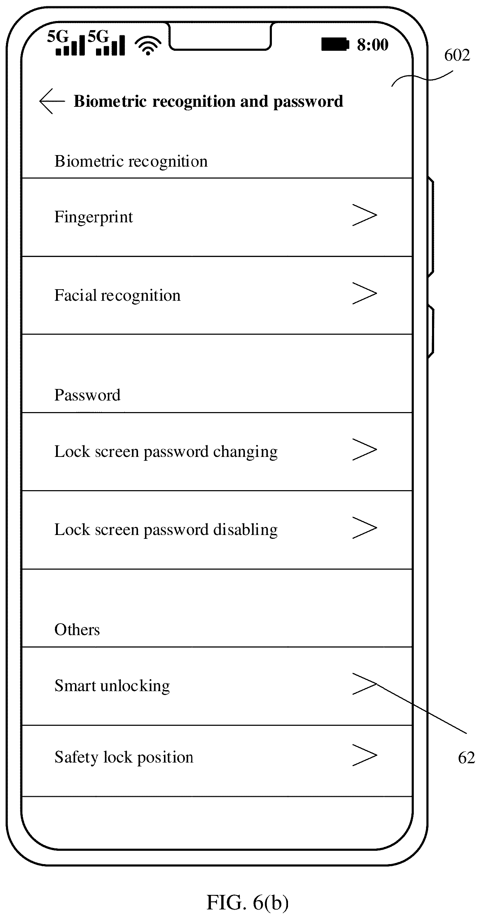

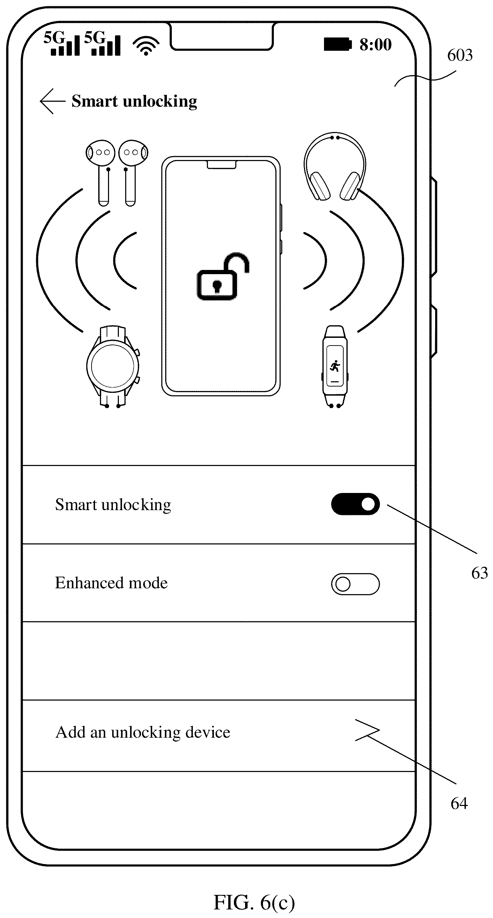

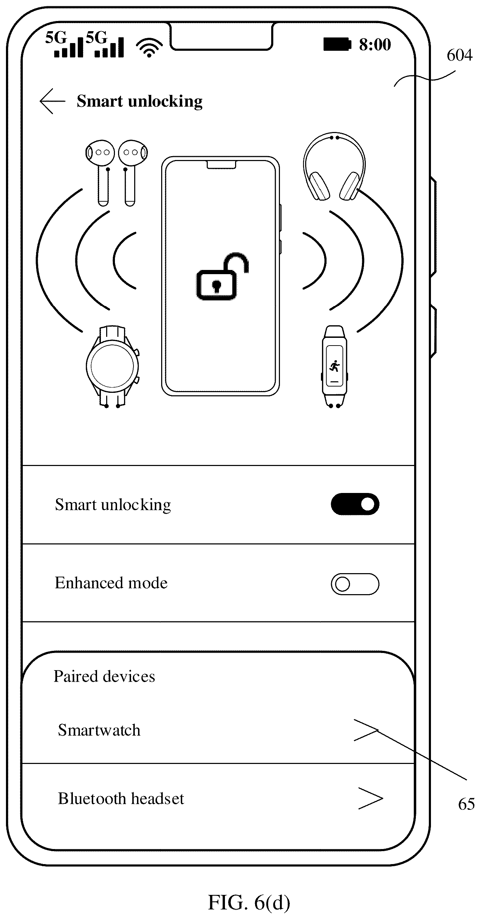

For example, in an interface 601 shown in FIG. 6(a), the first electronic device detects an operation of the user on a biometric recognition and password control 61 in a process of displaying a setting interface, and displays an interface 602 shown in FIG. 6(b). In the interface 602, the first electronic device detects an operation of the user on a smart unlocking control 62, and displays an interface 603 shown in FIG. 6(c). In the interface 603, the first electronic device detects an operation of the user on a smart unlocking switch control 63, and determines that the user indicates to enable an intelligent unlocking function. When the smart unlocking function is enabled, the first electronic device detects an operation of the user on an unlocking device addition control 64, and determines that the user indicates to add a trusted holding device. In this case, the first electronic device searches for nearby electronic devices that have established a communication connection, and displays an interface 604 shown in FIG. 6(d). The found electronic devices are displayed on the interface 604, for example, a smartwatch and a Bluetooth headset. Then, if the first electronic device detects an operation of the user on a smartwatch control 65, the first electronic device may send the trusted holding device addition request to a smartwatch corresponding to the smartwatch control 65, to request to add the smartwatch as a trusted holding device.

S503: The second electronic device determines device information, and generates the security key.

In some embodiments, the second electronic device parses the received trusted holding device addition request, to obtain the device information of the first electronic device carried in the trusted holding device addition request, and generates, based on the device information, a key used to protect communication security. Optionally, the second electronic device stores the device information of the first electronic device and the security key in the device trusted relationship management module shown in FIG. 4.

In some embodiments, the second electronic device generates device information of the second electronic device in response to the received trusted holding device addition request. Then, the second electronic device encrypts the generated device information through the security key, so that the encrypted device information can be subsequently sent to the first electronic device, to ensure information security.

Optionally, the device information of the second electronic device includes, for example, one or more of the following: identity authentication capability information of the second electronic device supported by the second electronic device, for example an authentication manner or an authentication trust level; a ranging manner supported by the second electronic device, for example Bluetooth ranging or wireless carrier communication (ultra wideband, UWB) ranging; a security capability level credential of the second electronic device, for example a device certificate or a trusted execution environment (trusted execution environment, TEE) level key certificate; and device identity credential information, for example a public key.

S504: The second electronic device sends the device information to the first electronic device.

In some embodiments, the second electronic device sends the encrypted device information of the second electronic device to the first electronic device. Correspondingly, the first electronic device receives the device information sent by the second electronic device.

S505: The first electronic device adds the trusted holding device based on the device information.

In some embodiments, after receiving the device information of the second electronic device, the first electronic device decrypts the device information, stores the decrypted device information of the second electronic device through the device trusted relationship management module shown in FIG. 4, and adds the trusted holding device, to be specific, the first electronic device adds the second electronic device as the trusted holding device of the first electronic device.

In this way, an authentication device can add the trusted holding device through the foregoing steps, and can subsequently perform a trusted service, such as unlocking, through the trusted holding device.

The following describes in detail the authentication method provided in embodiments of this application by using an example in which the first electronic device is an authentication device serving as a client (client) and the second electronic device is a trusted holding device serving as a server (server).

In some embodiments, to protect device security, user identity authentication is required before some services of an electronic device are used. A user identity authentication manner includes password authentication, facial recognition, fingerprint recognition, voiceprint recognition, and the like. For example, the user enters a password on a lock screen interface of a mobile phone to unlock the mobile phone.

Optionally, different user identity authentication manners have different user identity identification precision, different difficulty of being spoofed by a non-living body by an algorithm, and different difficulty of maliciously modifying a provided authentication result. Therefore, authentication trust levels of authentication results determined in different user identity authentication manners are different.

For example, Table 1 shows examples of user identity authentication manners corresponding to different authentication trust levels (authentication trust level, ATL) and supported typical service scenarios. It should be understood that content shown in Table 1 is merely an example for description, and does not limit the authentication trust level. In an actual scenario, related content of the authentication trust level may include more or less content than that shown in Table 1.

As shown in Table 1, the authentication trust level includes a total of five levels: ATL 4, ATL 3, ATL 2, ATL 1, and ATL 0, and the authentication trust levels are in descending order. For example, ATL 4>ATL 3>ATL 2>ATL 1>ATL 0.

For example, as shown in Table 1, an electronic device can accurately identify an individual user at 100% or has a strong capability for living body detection. For example, in a general financial-limit operation scenario, the electronic device uses an authentication manner of a personal identification number (personal identification number, PIN) of a secure keyboard to authenticate a user identity. After user identity authentication succeeds, an authentication trust level is ATL 4.

**Table 1**

| Authentication trust level | Description or example | Supported typical service scenario |
|---|---|---|
| ATL 4 | 100% accurate individual user identification, with a strong capability for living body detection, for example, PIN authentication using the secure keyboard | (1) General financial-limit operation; and |
| | | (2) access of user personal data at a critical level |
| ATL 3 | Accurate individual user identification, with relative strong capabilities for living body detection, such as fingerprint and 3D face authentication | (1) Small-amount payment; and |
| | | (2) screen unlocking |
| ATL 2 | Accurate individual user identification, with a specific capability for living body detection, for example, 2D face authentication | (1) Home device control; and |
| | | (2) device unlocking state maintaining |
| ATL 1 | Individual user identification, with a specific capability for living body detection, for example, voiceprint authentication and photoplethysmographic (photoplethysmographic, PPG) authentication | (1) Service risk control; and |
| | | (2) general personal data query |
| ATL 0 | Rough individual user distinguishing, without a capability for living body detection or with a weak capability for living body detection, for example, gait recognition or touchscreen behavior recognition | (1) Accurate service recommendation; and |
| | | (2) personalized service |

In some embodiments, the authentication device may add one or more trusted holding devices through step S501 to step S505. Highest authentication trust levels supported by different trusted holding devices are the same or different. In this case, operation ranges that can be performed by the authentication device based on the trusted holding device are the same or different.

For example, the trusted holding device may monitor a local user identity authentication success event, and may further obtain a user identity authentication success event sent by the authentication device. The user identity authentication success events may be determined in different authentication manners. In this case, as shown in Table 1, the trusted holding device may obtain a same authentication trust level or different authentication trust levels, so that the trusted holding device may support different authentication trust levels. Therefore, the authentication device may have different executable operation ranges based on a same authentication trust level supported by the trusted holding device, and may have a same executable operation range or different executable operation ranges based on different authentication trust levels supported by the trusted holding device. The operation ranges include operations in service scenarios corresponding to a highest authentication trust level supported by the trusted holding device and an authentication trust level below the highest authentication trust level.

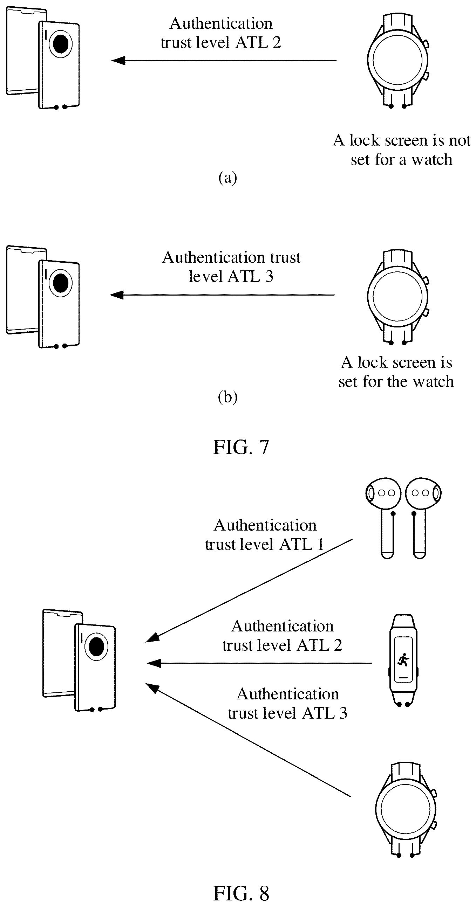

For example, as shown in (a) in FIG. 7, a watch is used as a trusted holding device of a mobile phone. When a lock screen is not set for the watch, a highest authentication trust level supported by the watch is ATL 2. Based on the highest authentication trust level supported by the watch and a trusted holding status, the mobile phone can execute operations in service scenarios corresponding to ATL 2 and ATL 1 shown in Table 1, for example, general personal data query. For example, when the watch is worn, a monitored local user identity authentication success event is that a PPG signal of a user is detected, and it is determined that the user who currently wears the watch is an owner. The obtained authentication trust level corresponding to the user identity authentication success event is ATL 2. Subsequently, an operation range that can be performed by the mobile phone includes operations in service scenarios corresponding to authentication trust levels at ATL 2 and below ATL 2.

As shown in (b) in FIG. 7, when a lock screen is set for the watch, the highest authentication trust level supported by the watch is ATL 3. Based on the highest authentication trust level supported by the watch and the trusted holding status, the mobile phone may perform operations in service scenarios corresponding to ATL 3, ATL 2, and ATL 1 shown in Table 1, for example, screen unlocking. For example, when the watch is worn, the monitored local user identity authentication success event is that the user enters a correct screen lock password to unlock the watch, and the obtained authentication trust level corresponding to the user identity authentication success event is ATL 3. Subsequently, an operation range that can be performed by the mobile phone includes operations in service scenarios corresponding to authentication trust levels at ATL 3 and below ATL 3.

For another example, as shown in FIG. 8, a trusted holding device added by the mobile phone includes a Bluetooth headset, a band, and a watch. In a current status, the Bluetooth headset can be authorized to perform operations in service scenarios corresponding to authentication trust levels at ATL 1 and below ATL 1; in a current status, the band can be authorized to perform operations in service scenarios corresponding to authentication trust levels at ATL 2 and below ATL 2; and in a current status, the watch can be authorized to perform operations in service scenarios corresponding to authentication trust levels at ATL 3 and below ATL 3. In this case, an operation range that can be performed by the mobile phone through a plurality of trusted holding devices connected to the mobile phone includes operations in service scenarios corresponding to authentication trust levels at ATL 3 and below ATL 3.

In some embodiments, after adding the trusted holding device, the authentication device may enter a trusted holding device authentication phase. In the trusted holding device authentication phase, the trusted holding device performs user identity authentication in response to a received authentication request sent by the authentication device.

As described above, authentication trust levels corresponding to different authentication manners are the same or different. In this case, after the authentication device adds the trusted holding device, the trusted holding device may monitor at least one of a local user identity authentication success event or a user identity authentication success event sent by the authentication device, and maintain the user identity authentication success events. In this way, when subsequently performing user identity authentication in response to the authentication request, the trusted holding device may determine, based on the recorded user identity authentication success event, whether a user identity can be successfully confirmed.

For example, a target authentication trust level corresponding to the authentication request is ATL 2. The trusted holding device in an authentication trusted state determines, based on the recorded user identity authentication success event, that the user identity authentication success event includes a user identity authentication success event at ATL 2 or higher than ATL 2, and may determine that the user identity authentication succeeds.

The following describes a process in which the trusted holding device maintains the identity authentication success event in the trusted holding device authentication phase.

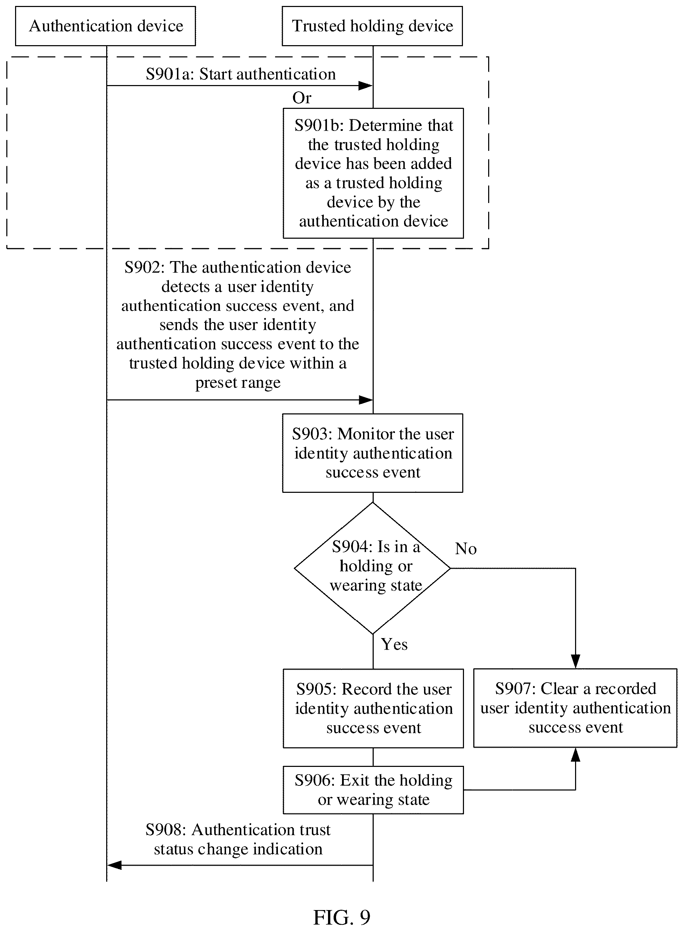

For example, FIG. 9 is a schematic flowchart of an authentication method for maintaining an identity authentication success event by a trusted holding device according to an embodiment of this application. It should be noted that the method is not limited to a specific sequence described in FIG. 9 and below. It should be understood that, in another embodiment, sequences of some steps in the method may be exchanged based on an actual requirement, or some steps in the method may be omitted or deleted. The method includes the following steps.

S901a: The trusted holding device determines that an authentication device starts authentication.

S901b: The trusted holding device determines that the trusted holding device has been added as a trusted holding device by the authentication device.

In some embodiments, after adding the trusted holding device, the authentication device may send a notification to the trusted holding device, to indicate, to the trusted holding device, that the trusted holding device has become the trusted holding device of the authentication device.

In some embodiments, after receiving an authentication request sent by the authentication device, the trusted holding device determines that the authentication request sent by the authentication device is received for the first time, and may determine to start authentication, trigger an authentication procedure, and start to monitor a user identity authentication success event (that is, perform step S901a). Alternatively, after determining that the trusted holding device has been added as a trusted holding device, the trusted holding device starts to monitor the user identity authentication success event (that is, performs step S901b).

S902: The authentication device detects the user identity authentication success event, and sends the user identity authentication success event to the trusted holding device within a preset range.

S903: The trusted holding device monitors the user identity authentication success event.

The user identity authentication success event monitored by the trusted holding device includes at least one of a locally-occurred user identity authentication success event or a user identity authentication success event sent by the authentication device.

In some embodiments, after determining that the authentication device starts authentication or determining that the trusted holding device becomes the trusted holding device of the authentication device, the trusted holding device may start to obtain the user identity authentication success event. A manner of obtaining the user identity authentication success event includes local monitoring, authentication device synchronization, and the like.

In some examples, to simplify a process of monitoring the user identity event, a change of a holding or wearing state of the trusted holding device does not affect monitoring of the user identity authentication event, but affects a process of recording the user identity authentication event in the following step S904 to step S907.

In some other examples, when determining that the trusted holding device is in a holding or wearing state, the trusted holding device may alternatively monitor a user identity authentication success event sent by the at least one of a local device or the authentication device.

Optionally, step S902 is an optional step. To be specific, the trusted holding device may alternatively not receive the user identity authentication success event sent by the authentication device, but only monitors the locally-occurred user identity authentication success event.

S904: The trusted holding device is in the holding or wearing state. If the trusted holding device is in the holding or wearing state, S905 is performed. If the trusted holding device is not in the holding or wearing state, S907 is performed.

In some embodiments, in a process of monitoring the local user identity authentication success event, the trusted holding device further monitors the holding or wearing state of the trusted holding device. When determining that the trusted holding device is in the holding or wearing state, the trusted holding device records the obtained user identity authentication success event, that is, performs the following step S905. After determining that the trusted holding device exits the holding or wearing state, that is, after switching to a non-holding or non-wearing state, the trusted holding device may clear the recorded user identity authentication success event. That is, the following step S907 is performed.

Optionally, the trusted holding device records the monitored user identity authentication success event in a valid authentication event list.

Optionally, that the trusted holding device is in the holding or wearing state indicates that the trusted holding device is held or worn, and that the trusted holding device exits the holding or wearing state indicates that the trusted holding device is not held or not worn.

It should be understood that, in this embodiment of this application, whether the trusted holding device is in the holding or wearing state is used as an example to determine whether to record the user identity authentication success event. However, when the trusted holding device is in different device forms, the user may carry the trusted holding device in another manner. In this case, if the user carries the trusted holding device in another manner, that is, the trusted holding device is in a carried state, the trusted holding device may also record the user identity authentication success event. When the user exits the carried state of the trusted holding device, the trusted holding device may no longer record the user identity authentication success event, and clear the recorded user identity authentication success event. In other words, the trusted holding device determines, by determining whether the trusted holding device is in the carried state (for example, whether the trusted holding device is in the holding state or the wearing state), whether to record the monitored user identity authentication success event. Details are not described below.

S905: The trusted holding device records the user identity authentication success event.

In some embodiments, when determining that the trusted holding device is in the holding or wearing state, the trusted holding device may record, in the valid authentication event list, the user identity authentication success event sent by the at least one of the local device or the authentication device.

For example, when the trusted holding device is in the holding or wearing state, the trusted holding device records the monitored locally-occurred user identity authentication user event. For example, the trusted holding device determines that a password is correct and performs unlocking in response to a password entering operation of the user. As shown in Table 1, an authentication trust level corresponding to a screen unlocking scenario is ATL 3. In this case, as shown in Table 2, the trusted holding device records the user authentication success event in the valid authentication event list, for example, information such as an authentication manner, an authentication trust level, authentication success time, and an authentication execution device.

For another example, after adding the trusted holding device, the authentication device detects the user identity authentication success event, and may send the user identity authentication success event to the trusted holding device within a preset range. Correspondingly, the trusted holding device receives the user identity authentication success event sent by the authentication device, and if determining that the trusted holding device is in the holding or wearing state, the trusted holding device may record the received user identity authentication success event. For example, as shown in Table 2, the trusted holding device may be used as a trusted holding device of one or more authentication devices. In this case, the trusted holding device may obtain and record user identity authentication success events sent by the one or more authentication devices. For example, after completing user identity authentication through a user fingerprint, a client 1 device sends a corresponding user identity authentication success event to the trusted holding device. For another example, after completing user identity authentication through a user voiceprint, a client 2 device sends a corresponding user identity authentication success event to the trusted holding device.

**Table 2**

| | Authentication manner | Authentication trust level | Authentication success time | Authentication execution device |
|---|---|---|---|---|
| 1 | Password authentication | ATL 3 | 8:00 | Local |
| 2 | PPG authentication | ATL 1 | 16:20 | Local |
| 3 | Fingerprint authentication | ATL 3 | 16:00 | Client 1 device |
| 4 | Voiceprint authentication | ATL 2 | 15:30 | Client 2 device |
| 5 | ... | ... | ... | ... |

In some embodiments, the user identity authentication success event recorded by the trusted holding device in the valid authentication event list includes a corresponding authentication trust level. In this case, subsequently, in a user identity authentication process of the authentication device, the trusted holding device may determine, based on the authentication trust level, whether an authentication requirement of the authentication device can be met. For example, a target authentication trust level of the authentication device is ATL 4. However, as shown in Table 2, a highest authentication trust level of the user identity authentication success event recorded by the trusted holding device is ATL 3. In other words, a highest authentication trust level supported by the trusted holding device is ATL 3, and does not meet an ATL 4 requirement. In other words, user identity authentication of the authentication request cannot succeed.

In this case, the trusted holding device records the user identity authentication success event, and returns different authentication results based on a set of recorded authentication events, thereby improving authentication flexibility while meeting user identity authentication security.

S906: The trusted holding device determines that the trusted holding device exits the holding or wearing state.

S907: The trusted holding device clears the recorded user identity authentication success event.

In some embodiments, when the trusted holding device is in the holding or wearing state, the trusted holding device may enter an authentication trusted state after determining an identity of the user who holds or wears the trusted holding device. For example, the trusted holding device may enter the authentication trusted state after determining, in response to a password entering operation of the user, that the user unlocks a current lock screen state. Subsequently, the user removes the trusted holding device. The trusted holding device determines that the trusted holding device is not in the holding or wearing state. In this case, the trusted holding device cannot obtain a relative distance between the user and the authentication device, and therefore cannot ensure that a user who currently operates the authentication device is an owner who holds or wears the trusted holding device. The trusted holding device immediately enters an authentication untrusted state. In other words, the trusted holding device enters the authentication untrusted state in response to exiting of the holding or wearing state.

In some embodiments, after determining that the trusted holding device exits the holding or wearing state, the trusted holding device clears the recorded user identity authentication success event. Subsequently, after determining that the trusted holding device is in the holding or wearing state again, the trusted holding device records the user identity authentication success event. In other words, in response to a change of the holding or wearing state of the trusted holding device, the trusted holding device clears the user identity authentication success event or triggers recording of the user identity authentication success event.

In some embodiments, in step S904, if the trusted holding device obtains the user identity authentication success event and determines that the trusted holding device is not currently in the holding or wearing state, step S907 may be performed. To be specific, the currently obtained user identity authentication success event is not recorded, and an operation of clearing the valid authentication event list may be performed again, to avoid that the valid authentication event list stores the user identity authentication success events recorded in a previous holding or wearing state period, affecting authentication security.

In this way, subsequently, the trusted holding device performs the user identity authentication procedure of the authentication device based on the user identity authentication success event recorded in a single holding or wearing state period, thereby improving authentication security.

S908: The trusted holding device sends an authentication trust status change indication to the authentication device.

In some embodiments, after the holding or wearing state of the trusted holding device changes, an authentication trust status correspondingly changes. For example, the trusted holding device is in the authentication trusted state when the trusted holding device is in the holding or wearing state and the valid authentication event list is not empty. The trusted holding device is in the authentication untrusted state when the trusted holding device exits the holding or wearing state or the valid authentication event list is empty. After determining that the trusted holding device changes from the authentication trusted state to the authentication untrusted state or changes from the authentication untrusted state to the authentication trusted state, the trusted holding device sends the authentication trust status change indication to the authentication device, to indicate a change of an authentication state of the trusted holding device. Correspondingly, after receiving the status change indication, the authentication device stores the authentication state of the trusted holding device. Subsequently, the authentication device may determine, based on stored authentication states of one or more trusted holding devices, whether to send an authentication request to a trusted holding device that is in the authentication trusted state.

Optionally, the authentication trust status change indication includes an authentication trust status invalidity indication indicating that the trusted holding device switches to the authentication untrusted state, and an authentication trust status validity indication indicating that the trusted holding device switches to the authentication trusted state.

Optionally, step S908 is an optional step, and the trusted holding device does not need to notify the authentication device after the authentication state changes. Alternatively, when the authentication device subsequently needs to perform user identity authentication, the authentication device may query a corresponding trusted holding device for an authentication state of the trusted holding device. Alternatively, when the authentication device subsequently needs to perform user identity authentication, the authentication device directly sends an authentication request to a trusted holding device that meets an authentication trust level requirement, and the trusted holding device triggers a corresponding authentication procedure based on an authentication trust status of the trusted holding device.

In this way, the trusted holding device in the authentication trusted state monitors and records a user identity authentication success event sent by at least one of a local device or the authentication device, and flexibly performs user identity authentication based on the recorded content subsequently, to meet a use requirement of the user.

In addition, the trusted holding device has poor device performance, and therefore has a low device security capability level. However, the trusted holding device can also receive a user identity authentication success event that corresponds to a high authentication trust level and that is sent by another device. In this way, the trusted holding device subsequently determines an authentication result based on the recorded user identity authentication success event, so that the trusted holding device with poor device performance can complete user identity authentication of an authentication device that has a high authentication trust level requirement, thereby enriching authentication scenarios.

In some embodiments, step S904 to step S908 are cyclic steps. The trusted holding device determines, based on a change of the holding or wearing state of the trusted holding device, whether to record the user identity authentication success event or whether to clear the valid authentication event list. For example, after step S906, the trusted holding device may return to step S904. If the trusted holding device determines that the trusted holding device is switched to the holding or wearing state again, the trusted holding device may start to record the obtained user identity authentication success event, and after confirming again that the trusted holding device exits the holding or wearing state, clear the user identity authentication success event recorded in the current holding or wearing state period.

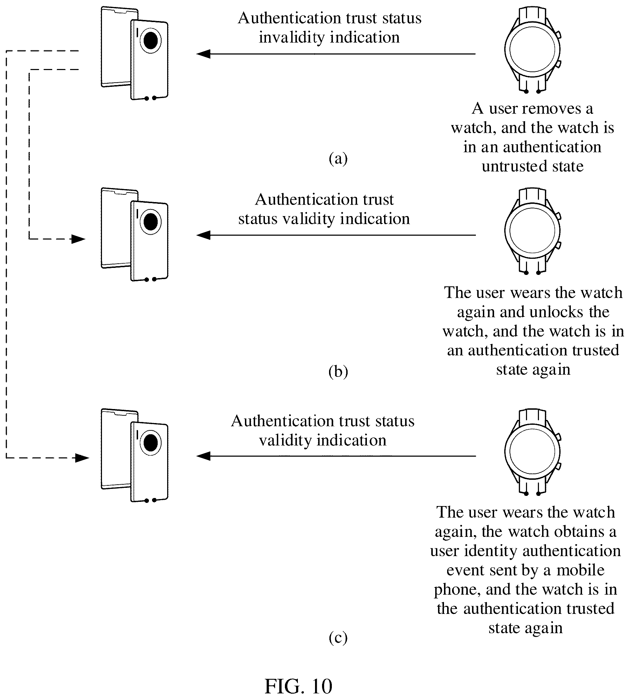

For example, as shown in (a) in FIG. 10, after the user removes the watch, the watch determines that the watch exits the holding or wearing state and is in the authentication untrusted state. The watch, as the trusted holding device, may send an authentication trust status invalidity indication to a corresponding authentication device (for example, a mobile phone), to indicate that the trusted holding device switches to the authentication untrusted state.

Then, as shown in (b) in FIG. 10, the user wears the watch again and unlocks the watch. After determining that the watch is in the authentication trusted state again, the watch may send an authentication trust status validity indication to the mobile phone, to indicate that the trusted holding device switches to the authentication trusted state.

Alternatively, as shown in (c) in FIG. 10, after the user wears the watch again, if the mobile phone detects a user operation and determines a user identity authentication success event, the watch may obtain the user identity authentication success event sent by the mobile phone. After determining that the watch is in the authentication trusted state again, the watch may send the authentication trust status validity indication to the mobile phone, to indicate that the trusted holding device switches to the authentication trusted state.

After switching to the holding or wearing state, the watch may continuously monitor a user identity authentication success event sent by at least one of a local device or the authentication device, switch from the authentication untrusted state to the authentication trusted state based on the obtained user identity authentication success event, and record the obtained user identity authentication success event.

In this way, the trusted holding device flexibly switches from the authentication untrusted state to the authentication trusted state by monitoring the holding or wearing state and a local user identity authentication success event or the user identity authentication success event sent by the authentication device, to meet a subsequent user identity authentication requirement of the authentication device.

In some embodiments, after entering the authentication trusted state in different authentication manners, the trusted holding device may provide different authentication trust levels.

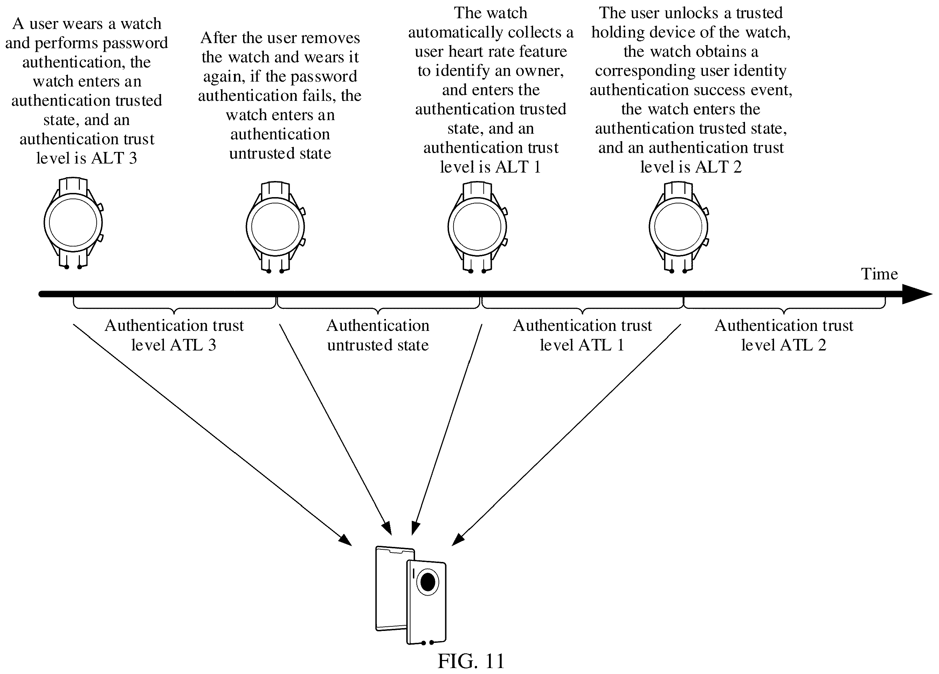

For example, as shown in FIG. 11, a mobile phone is used as an authentication device, and a trusted holding device corresponding to the mobile phone is a watch. After a user wears the watch and performs password authentication, the watch enters an authentication trusted state, and an authentication trust level is ALT 3. In this case, the watch may provide the authentication trust level ALT 3 for the mobile phone. Subsequently, after the user removes the watch and wears it again, if the password authentication fails, the watch enters an authentication untrusted state. In this case, the watch may send an authentication trust status invalidity indication to the mobile phone, and the mobile phone may determine that the watch is currently in the authentication untrusted state. Subsequently, the watch automatically collects a user heart rate feature to identify an owner, and enters the authentication trusted state, and an authentication trust level is ALT 1. In this case, the watch may provide the authentication trust level ALT 1 for the mobile phone, and the watch may send a trust status validity indication to the mobile phone. Subsequently, the user unlocks a trusted holding device (for example, the mobile phone or another electronic device) of the watch. The watch obtains a corresponding user identity authentication success event, the watch enters the authentication trusted state, and an authentication trust level is ALT 2. In this case, a highest authentication trust level that can be provided by the watch for the mobile phone is ALT 2.

In this way, when the trusted holding device is in a holding or wearing state, the trusted holding device can meet user identity authentication requirements of the authentication device at different authentication trust levels based on recorded user identity authentication success events corresponding to the different authentication trust levels.

The following describes a process in which the trusted holding device performs authentication on the authentication device based on the maintained identity authentication event in the trusted holding device authentication phase.

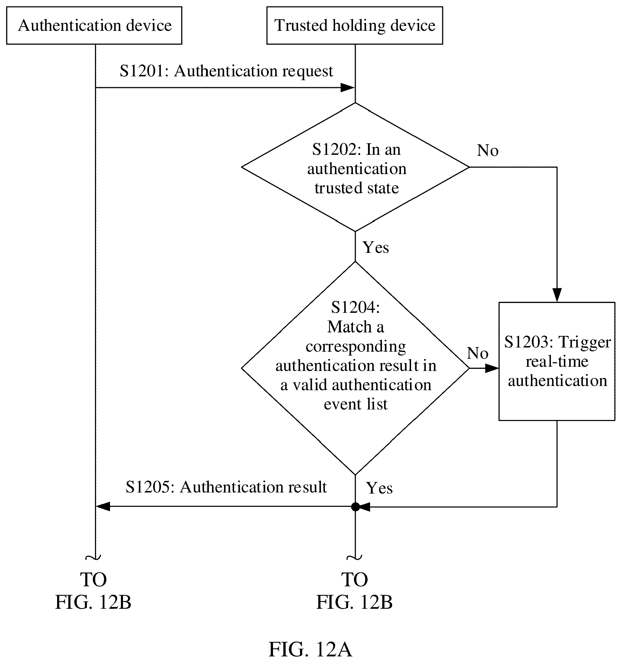

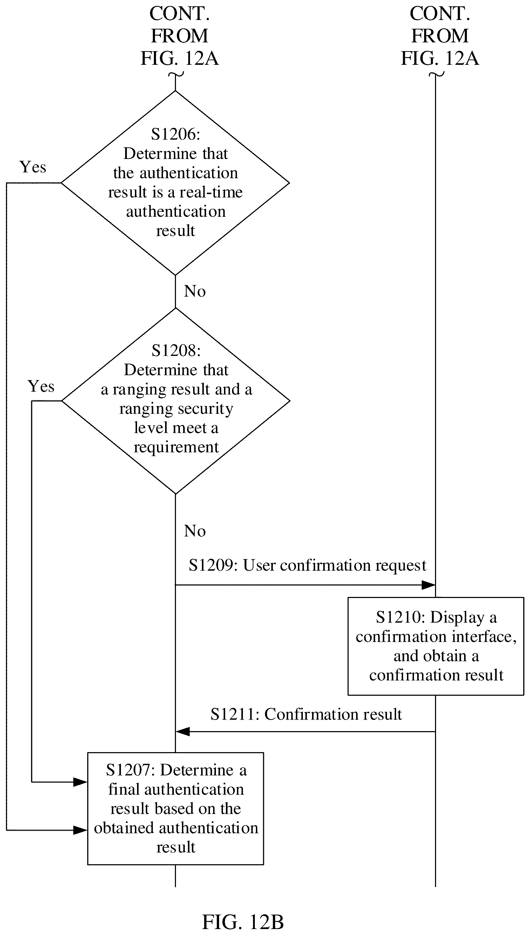

For example, FIG. 12A and FIG. 12B are a schematic flowchart of an authentication method in a trusted holding device authentication phase according to an embodiment of this application. It should be noted that the method is not limited to a specific sequence described in FIG. 12A and FIG. 12B and below. It should be understood that, in another embodiment, sequences of some steps in the method may be exchanged based on an actual requirement, or some steps in the method may be omitted or deleted. The method includes the following steps.

S1201: An authentication device sends an authentication request to a trusted holding device.

In some embodiments, after determining, in response to a user operation, that user identity authentication is triggered, the authentication device may send the authentication request to the paired trusted holding device, to determine an authentication result.

Optionally, after determining an authentication trust level requirement corresponding to a currently triggered user identity authentication, the authentication device may send the authentication request to a trusted holding device that meets the authentication trust level requirement.

For example, an unlocking function in the authentication device detects an unlocking operation of the user, and determines to trigger user identity authentication, where an authentication trust level requirement corresponding to the unlocking function is ATL 3. In this case, the authentication device traverses authentication trust levels supported by trusted holding devices that have been paired with the authentication device, and sends an authentication request to a trusted holding device that supports a highest authentication trust level at ATL 3 or higher than ATL 3.

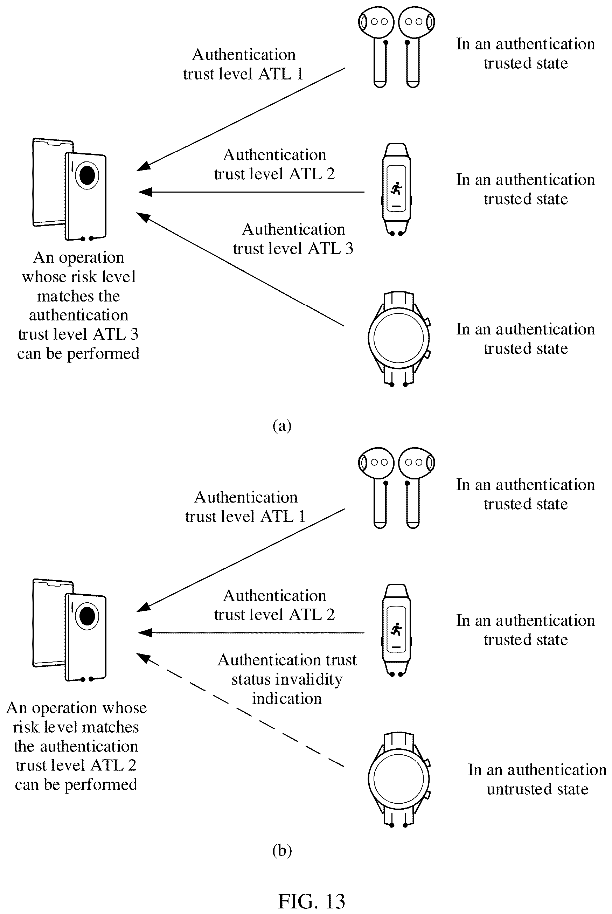

For example, when a same authentication device is connected to a plurality of trusted holding devices, and the plurality of trusted holding devices are all in the authentication trusted state, an operation range of the authentication device depends on a trusted holding device with a highest authentication trust level. For example, as shown in (a) in FIG. 13, the mobile phone is connected to three trusted holding devices, and the three trusted holding devices are all in the authentication trusted state. The three trusted holding devices include a Bluetooth headset supporting ATL 1 as a highest authentication trust level, a wristband supporting ATL 2 as a highest authentication trust level, and a watch supporting ATL 3 as a highest authentication trust level. In this case, the mobile phone can at most perform an operation whose risk level matches the authentication trust level ATL 3.

Then, as shown in (b) in FIG. 13, the mobile phone determines, in response to a received authentication trust status invalidity indication sent by the watch, that the watch is in the authentication untrusted state, or the mobile phone determines that the mobile phone is disconnected from the watch. In this case, the mobile phone can at most perform an operation whose risk level matches the authentication trust level ATL 2.

In the scenario shown in FIG. 13, the mobile phone may determine a target authentication trust level based on a risk level corresponding to a to-be-performed user authentication operation, and send an authentication request to a trusted holding device that meets a requirement.

Optionally, after determining that user identity authentication needs to be performed through the trusted holding device, a service may generate a service constraint condition, where the service constraint condition indicates a requirement of the service that currently requires the user identity authentication. The service constraint condition includes one or more of the following: an authentication trust level requirement, a user identity confirmation time requirement, a user identity confirmation manner requirement, a user identity confirmation device requirement, an available user confirmation identifier, a real-time authentication trigger identifier, and the like.

Optionally, the authentication request may carry one or more of the service constraint conditions.

The authentication trust level requirement indicates a target authentication trust level of the authentication device.

The user identity confirmation time requirement indicates a time requirement for an available user identity authentication success event. For example, the authentication device indicates, based on the user identity confirmation time requirement, the trusted holding device to determine an authentication result based on a user identity authentication success event that occurs within four hours and that is recorded in a valid authentication event list.

The user identity confirmation manner requirement indicates a requirement on a user identity confirmation manner of a user identity authentication success event that matches the user identity authentication result. For example, the user identity confirmation manner includes biometric feature authentication or non-biometric feature authentication. For example, the authentication device indicates, based on the user identity confirmation manner requirement, the trusted holding device to determine the authentication result based on a user identity authentication success event that is generated through non-biometric feature authentication and that is recorded in the valid authentication event list.

The user identity confirmation device requirement indicates a requirement for a device that generates a user identity authentication success event. For example, the user identity authentication success event recorded in the valid authentication event list is a user identity authentication success event locally generated by the trusted holding device, or a user identity authentication success event notified by another device. For example, the authentication device indicates, based on the user identity confirmation device requirement, the trusted holding device to determine the authentication result based on a user identity authentication success event that is locally generated by the trusted holding device and that is recorded in the valid authentication event list.

The available user confirmation identifier may indicate whether user confirmation is required. For example, if a service determines that the authentication result needs to be reconfirmed by the user to ensure security, the available user confirmation identifier may be added to a generated service constraint condition. In a subsequent user identity authentication process, the authentication device sends a user confirmation request to the trusted holding device based on the available user confirmation identifier.

The real-time authentication trigger identifier indicates whether real-time user authentication is allowed. For example, when the trusted holding device receives an authentication request in the authentication untrusted state, or when the trusted holding device is in the authentication trusted state but does not match a corresponding authentication result in the valid authentication event list, the trusted holding device may determine, based on the real-time authentication trigger identifier, whether to trigger real-time authentication of the user. If the trusted holding device determines, based on the real-time authentication trigger identifier, to trigger real-time authentication of the user, the trusted holding device may display an authentication interface, receive a password entered by the user, and the like, to obtain an authentication result.

S 1202: The trusted holding device is in the authentication trusted state. If the trusted holding device is in the authentication trusted state, step S 1204 is performed. If the trusted holding device is not in the authentication trusted state, step S1203 is performed.

In some embodiments, if the trusted holding device receives the authentication request sent by the authentication device, it indicates that the trusted holding device is located within a communication range of the authentication device. That the trusted holding device is in the authentication trusted state indicates that the trusted holding device is held or worn by the user. In this case, after receiving the authentication request and determining that the trusted holding device is in the authentication trusted state, the trusted holding device may determine that an owner of the trusted holding device is within a communication distance range between the authentication device and the trusted holding device. Therefore, security of the authentication result determined by the trusted holding device can be ensured. The trusted holding device may perform the following step S 1204 to determine the authentication result.

Otherwise, if the trusted holding device determines that the trusted holding device is in the authentication untrusted state, and cannot ensure security of the authentication result determined by the trusted holding device, the trusted holding device may trigger real-time authentication, that is, perform the following step S1203.

S1203: The trusted holding device triggers the real-time authentication.

In some embodiments, after receiving the authentication request, the trusted holding device determines that the trusted holding device is in the authentication untrusted state. In this case, the trusted holding device may determine, based on the real-time authentication trigger identifier carried in the authentication request, whether to trigger the real-time authentication of the user. If the trusted holding device determines that the authentication request carries the real-time authentication trigger identifier, the real-time authentication of the user may be triggered, and the trusted holding device may perform a real-time authentication procedure. Optionally, before triggering the real-time authentication of the user, the trusted holding device first determines whether the trusted holding device supports real-time authentication. If the trusted holding device supports real-time authentication, the trusted holding device may perform the real-time authentication procedure.

Optionally, a real-time authentication manner includes a plurality of manners such as indicating the user to enter a password, facial recognition, fingerprint recognition, and voiceprint recognition. The trusted holding device may determine, based on an authentication manner supported by the trusted holding device, a target authentication trust level, and the like, an authentication manner used in a real-time authentication process. For example, the trusted holding device displays an authentication interface, and receives a password entered by the user, to determine a real-time authentication result.

Optionally, if the authentication request does not carry the real-time authentication trigger identifier, or the real-time authentication trigger identifier indicates that real-time user authentication cannot be triggered, the user identity authentication fails.

In some embodiments, after triggering real-time authentication, the trusted holding device may obtain an authentication result. When the authentication result indicates that the authentication succeeds, the authentication result carries an authentication trust level corresponding to a corresponding real-time authentication manner.

In some embodiments, after triggering real-time authentication and after the real-time authentication succeeds, the trusted holding device switches to the authentication trusted state. If the trusted holding device is in a holding or wearing state, the trusted holding device may record a user identity authentication success event of the real-time authentication in a valid authentication event list.

In this way, in the conventional technology, if the trusted holding device is in the authentication untrusted state, the user cannot use the trusted holding device to trigger user identity authentication of the authentication device, and can only return to an authentication device side to perform user identity authentication. User operations are complex. According to the authentication method provided in this embodiment of this application, when the trusted holding device is in the authentication untrusted state, the trusted holding device may also trigger real-time user authentication. The user only needs to operate the trusted holding device at hand, to complete user identity authentication of the authentication device, thereby improving use convenience of the user.

S1204: The trusted holding device matches a corresponding authentication result in the valid authentication event list. If the trusted holding device matches a corresponding authentication result in the valid authentication event list, step S1205 is performed; and if the trusted holding device does not match a corresponding authentication result in the valid authentication event list, step S1203 is performed.

In some embodiments, in response to the authentication request sent by the authentication device, the trusted holding device in the authentication trusted state obtains the stored valid authentication event list. Then, the trusted holding device may match, in the valid authentication event list based on the service constraint conditions carried in the authentication request, such as an authentication trust level requirement, a user identity confirmation time requirement, a user identity confirmation manner requirement, and a user identity confirmation device requirement, a user identity authentication success event that meets the service constraint condition, to determine the authentication result. If a user identity authentication event that meets the service constraint condition is matched, an authentication trust level corresponding to the user identity authentication can be determined. In this case, the authentication result indicates that the authentication succeeds, and the authentication trust level is carried.

For example, the following scenarios are used to describe a matching process of the authentication result.

Scenario 1: An unlocking function of the authentication device triggers the authentication procedure. The authentication request carries the following content: An authentication trust level requirement is ATL 3, a user identity confirmation time requirement is within four hours (for example, current time is 16:30), a user identity confirmation manner requirement is not limited, and a user identity confirmation device requirement is not limited. Correspondingly, the trusted holding device matches, in the valid authentication event list shown in Table 2 in response to the received authentication request, a user identity authentication success event that meets the requirement. For example, a user identity authentication event that meets an authentication trust level requirement and that is matched by the trusted holding device is a user identity authentication event in a first record and a user identity authentication event in a third record, where authentication success time in the user identity authentication event in the first record does not meet a user identity confirmation time requirement. In this case, the trusted holding device determines that the matched user identity authentication success event is the user identity authentication success event in the third record, generates a corresponding authentication success result, and carries an authentication trust level ATL 3.

Scenario 2: An unlocking function corresponding to an application in an application store of the authentication device triggers the authentication procedure. The authentication request carries the following: An authentication trust level requirement is ATL 2, a user identity confirmation time requirement is within 10 minutes (for example, current time is 16:30), a user identity confirmation manner requirement is not limited, and a user identity confirmation device requirement is not limited. Correspondingly, the trusted holding device matches, in the valid authentication event list shown in Table 2 in response to the received authentication request, a user identity authentication success event that meets the requirement. For example, if the trusted holding device fails to match a user identity authentication success event that meets the user identity confirmation time requirement, the trusted holding device may determine that the authentication result indicates that matching fails.

**In** some embodiments, if the trusted holding device determines that matching of a corresponding identity authentication success event in the valid authentication event list fails, the trusted holding device may determine to trigger real-time authentication, that is, perform step S1203. Optionally, the trusted holding device may determine, based on the real-time authentication trigger identifier, whether to trigger real-time authentication.

S1205: The trusted holding device sends the authentication result to the authentication device.

**In** some embodiments, after determining the authentication result in a table lookup (for example, step S1204) or real-time authentication (for example, step S1203) manner, the trusted holding device may send the determined authentication result to the authentication device.

Optionally, the trusted holding device encrypts the authentication result through the security key determined in step S503 shown in FIG. 5, and sends the encrypted authentication result to the authentication device.

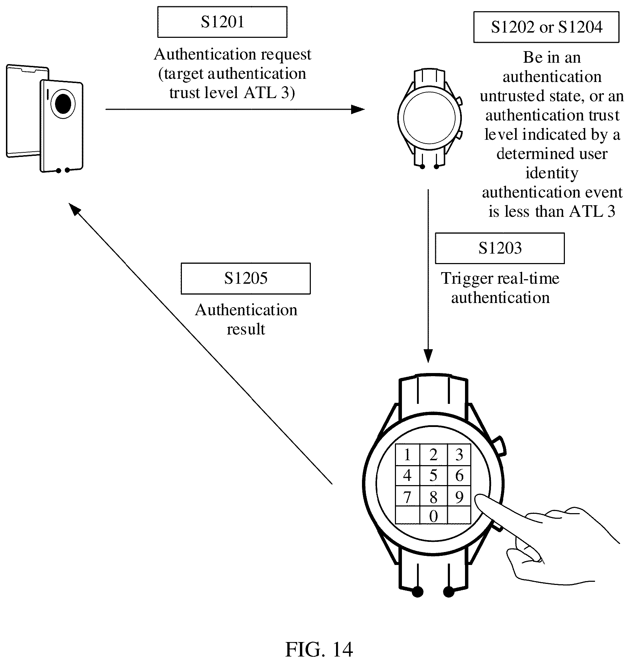

For example, in step S1201 to step S1205, as shown in FIG. 14, a target authentication trust level of the authentication device is ATL 3, for example, an authentication trust level requirement carried in the authentication request is ATL 3 (that is, step S1201). Correspondingly, after receiving the authentication request sent by the authentication device, the trusted holding device determines that the trusted holding device is in the authentication untrusted state (that is, step S1202), or determines that an authentication trust level indicated by the user identity authentication event is lower than ATL 3 (that is, step S1204). In this case, the trusted holding device may trigger real-time authentication (that is, step S1203). For example, the trusted holding device triggers real-time authentication in a corresponding authentication manner, for example, password authentication, based on the target authentication trust level ATL 3. The trusted holding device displays an authentication interface, displays a password entering window on the authentication interface, and receives a password entered by the user. If the trusted holding device determines that the password is correct, the trusted holding device may determine that the authentication result indicates that the authentication succeeds, and a corresponding authentication trust level is ATL 3. Alternatively, if the trusted holding device determines that the password is incorrect, the trusted holding device may determine that the authentication result indicates that the authentication fails. Then, the trusted holding device may send the authentication result encrypted through the security key to the authentication device (that is, step S1205).

S1206: The authentication device determines that the authentication result is a real-time authentication result. If the authentication device determines that the authentication result is a real-time authentication result, S1207 is performed. If the authentication device determines that the authentication result is a non-real-time authentication result, S1208 is performed.

**In** some embodiments, after receiving the authentication result, the authentication device may determine whether the authentication result is a real-time authentication result. If the authentication result is the real-time authentication result, it may be determined that an owner and the trusted holding device are within a nearby communication range. The user is aware of and controllable in the authentication procedure, and reliability of the authentication result is high. Therefore, the authentication device may directly determine a final authentication result, that is, perform the following step S1207. If the authentication result is the non-real-time authentication result, and the authentication result is determined by the trusted holding device by querying a table, the authentication device may further perform ranging confirmation on the trusted holding device to ensure reliability of the authentication result, so as to determine whether a ranging result and a ranging security level of the trusted holding device meet a requirement, that is, perform the following step S1208.

S1207: The authentication device determines the final authentication result based on the obtained authentication result.

In some embodiments, after receiving the authentication result, the authentication device determines whether the authentication result indicates that the authentication succeeds. If the authentication result indicates that the authentication fails, the authentication device may prompt the user to perform user identity authentication in another manner. If it is determined that the authentication result indicates that the authentication succeeds, the authentication device may obtain an authentication trust level carried in the authentication result, and further evaluate and confirm the authentication trust level.

For example, if the user identity authentication success event recorded by the trusted holding device includes a user identity authentication success event sent by another device, authentication results fed back by some trusted holding devices with low security capability levels may also carry a high authentication trust level. Therefore, the authentication device needs to re-evaluate the authentication result, so that the finally determined authentication result is reliable.

In some embodiments, different trusted holding devices have different security capability levels, and the security capability level of the trusted holding device affects an authentication trust level determined by the trusted holding device. Optionally, the security capability level of the trusted holding device is classified into three levels: high, medium, and low. For example, when the security capability level of the trusted holding device is low, the authentication trust level determined by the trusted holding device may be downgraded, to further ensure reliability of the final authentication result.

In some examples, when the authentication result is the non-real-time authentication result, if the security capability level of the trusted holding device is a high level, an authentication trust level in the final authentication result determined by the authentication device is equal to an authentication trust level in the authentication result determined by the trusted holding device; if the security capability level of the trusted holding device is a medium level, the authentication trust level in the final authentication result determined by the authentication device is equal to the authentication trust level in the authentication result determined by the trusted holding device minus 1; and if the security capability level of the trusted holding device is lower than the medium level (for example, a low or lower level), the authentication trust level in the final authentication result determined by the authentication device is equal to ATL 0 to ATL 1. To be specific, regardless of the authentication trust level in the authentication result determined by the trusted holding device, the authentication trust level that can be provided by the trusted holding device is low when the security capability level of the trusted holding device is low.

In some other examples, when the authentication result is the real-time authentication result, if the security capability level of the trusted holding device is a high level, the authentication trust level in the final authentication result determined by the authentication device is equal to the authentication trust level in the authentication result determined by the trusted holding device; if the security capability level of the trusted holding device is a medium level, the authentication trust level in the final authentication result determined by the authentication device is equal to the authentication trust level in the authentication result determined by the trusted holding device minus 1; and if the security capability level of the trusted holding device is lower than the medium level (for example, a low or lower level), the authentication trust level in the final authentication result determined by the authentication device is equal to ATL 0 to ATL 1. To be specific, regardless of the authentication trust level in the authentication result determined by the trusted holding device, the authentication trust level that can be provided by the trusted holding device is low when the security capability level of the trusted holding device is low.

For example, corresponding to Scenario 1 in step S1204, the authentication trust level carried in the authentication result sent by the trusted holding device and received by the authentication device is ATL 3. In Scenario 1, the authentication trust level requirement carried in the authentication request is ATL 3, that is, the target authentication trust level of the authentication device is ATL 3.

For example, if the authentication device determines that the security capability level of the trusted holding device is a high level, the authentication device determines that an authentication trust level in the final authentication result is ATL 3. If the authentication device determines that the authentication trust level meets a target authentication trust level requirement, unlocking may be triggered.

For another example, if the authentication device determines that the security capability level of the trusted holding device is a medium level, the authentication device determines that the authentication trust level in the final authentication result is ATL 3-1=ATL 2 (that is, an authentication trust level 3 minus 1 is equal to an authentication trust level 2). If the authentication device determines that the authentication trust level does not meet the target authentication trust level requirement, unlocking may fail. Optionally, after the unlocking fails, the authentication device may prompt the user to perform unlocking in another manner.

In some embodiments, the authentication device may determine the security capability level of the trusted holding device based on the following content: a security level of a trusted relationship between the authentication device and the trusted holding device, a security level of authentication trust status maintenance, a security level of holding or wearing state detection, and a ranging security level. Optionally, for specific requirements of each content, refer to content shown in Table 3. It should be understood that the content shown in Table 3 is merely an example for description, and may include more or less content than the content shown in Table 3 in an actual application scenario.

For example, when all the content shown in Table 3 meets corresponding requirements of the high level, the authentication device may determine that the security capability level of the trusted holding device is a high level. For another example, when the security level of the trusted relationship between the authentication device and the trusted holding device, the security level of authentication trust status maintenance, and the security level of holding or wearing state detection shown in Table 3 all meet a requirement of the high level, but the ranging security level can meet only a requirement of the medium level, the authentication device may determine that the security capability level of the trusted holding device is a medium level.

The security level of the trusted relationship between the authentication device and the trusted holding device indicates security of a channel established after the authentication device and the trusted holding device confirm the trusted relationship. A higher security level of the trusted relationship between the two devices indicates that a session security key negotiated after the trusted relationship is confirmed is more difficult to crack, communication security is higher, and a probability that an authentication parameter and an authentication result of the trusted holding device are maliciously modified during transmission is lower.

The security level of authentication trust status maintenance indicates a capability of the trusted holding device to maintain a valid authentication event list. For example, a higher security level of authentication trust status maintenance of the trusted holding device indicates a better application isolation degree, a lower probability that a user identity authentication success event in the valid authentication event list maintained by the trusted holding device is maliciously modified, and a higher capability of maintaining the valid authentication event list.

The security level of holding or wearing state detection indicates a detection capability of the trusted holding device for a holding or wearing state of the trusted holding device. If the trusted holding device detects its holding or wearing state more accurately, a possibility of switching a user entity held by the trusted holding device without being perceived by the trusted holding device is lower after a user identity is confirmed. When an owner is present, a risk of a service operation executed based on the authentication result determined by the trusted device is controllable.

The ranging security level indicates a supported detection capability of a distance between the authentication device and the trusted holding device. For example, if supported detection of the distance between the authentication device and the trusted holding device is more accurate, a risk of performing a service operation based on the authentication result determined by the trusted holding device when the owner is present is more controllable.

Optionally, the ranging is to ensure that when the authentication device uses the authentication result of the trusted holding device, the user is around the authentication device, so that a service operation corresponding to the authentication result can be known and controlled by the user to a greatest extent. However, the user is prompted on a trusted holding device side to manually perform confirmation, which can more reliably achieve the objective. Therefore, a manual confirmation result of the user may replace a requirement on the ranging security level. For example, as shown in Table 4, when the authentication trust level in the finally determined authentication result is degraded due to the ranging security level and does not meet the target authentication trust level requirement, the authentication device may trigger user confirmation (namely, the following step S1208 to step S1211) to obtain a user confirmation result. Then, the authentication device matches a corresponding ranging security level based on a user manual confirmation requirement shown in Table 4, and re-confirms the final authentication result. For a specific user confirmation method, refer to the content described in the following step S1208 to step S1211. Details are not described herein again.

**Table 3**

| Security capability level of the trusted holding device | Security level of a trusted relationship between the authentication device and the trusted holding device | Security level of authentication trust status maintenance | Security level of holding or wearing state detection | Ranging security level |
|---|---|---|---|---|
| High | Binding based on a user operation (like account login or QR code scanning) | Storing and maintaining in a secure and isolated environment | High-precision wearing detection and a capability for wearingbased living body detection | High-precision near-field ranging capability, preventing a relay attack, for example, including actual physical contact (such as a USB security key) or manual confirmation by the user |
| Medium | Authentication according to a general connection protocol (like Bluetooth binding) | Storing and maintaining in a system environment with data isolation and permission access control | High-precision wearing detection | High-precision near-field ranging capability, or manual confirmation by the user |
| Low | Identification based on a device universal identifier (like a media access control (media access control, MAC) address, a sequence number (sequence number, SN), or the like) | Storing and maintaining in a system environment without application data isolation and access control | Low-precision wearing detection, even unable to determine whether the user is wearing | Determining whether two devices are within a reach range of a signal like Wi-Fi or Bluetooth, or manual confirmation by the user |

**Table 4**

| Security capability level of the trusted holding device | Ranging security level | User manual confirmation requirement |
|---|---|---|
| High | High-precision near-field ranging capability, preventing a relay attack, for example, including actual physical contact (such as a USB security key) | An encrypted channel is established based on the device mutual trusted relationship authentication established based on user operations, and the user confirmation result is sent through the encrypted channel |
| Medium | High-precision near-field ranging capability | An encrypted channel is established based on the device mutual trusted relationship authentication established based on a general connection protocol (such as Bluetooth or Wi-Fi), and the user confirmation result is sent through the encrypted channel |
| Low | Determining whether two devices are within a reach range of a signal like Wi-Fi or Bluetooth | Sending a user confirmation result through no encrypted channel |

In this way, authentication trust levels supported by different trusted holding devices are evaluated based on different security capability levels of the trusted holding devices, to support service operations of different risks, thereby expanding a range of authentication devices supported by the trusted holding devices, and ensuring security of using an authentication result.

In addition, a manner in which the trusted holding device enters the authenticated trusted state is extended, and the final authentication result and the authentication trust level of the trusted holding device are evaluated based on an authentication trust level corresponding to an authentication manner used by the trusted holding device to enter the authenticated trusted state, and with reference to an authentication requirement indicated by the authentication request and the security capability level of the trusted holding device, so that the trusted holding device does not necessarily need to enter the authenticated trusted state manually, thereby facilitating user operations. In addition, because authentication results of different authentication trust levels can be provided based on a service requirement, a supported service range is expanded.

In some other embodiments, after determining the authentication result, the trusted holding device may also directly evaluate the authentication result based on the security capability level of the trusted holding device, and directly send the final authentication result to the authentication device after determining the final authentication result. In this case, the authentication device does not need to subsequently evaluate the obtained authentication result based on the security capability level of the trusted holding device. During authentication result evaluation, the trusted holding device may determine the ranging security level based on ranging capabilities of the authentication device and the trusted holding device. Alternatively, the trusted holding device directly sends the security capability level of the trusted holding device to the authentication device, and the authentication device directly evaluates the authentication result based on the obtained security capability level, without re-confirming the security capability level of the trusted holding device.

S1208: The authentication device determines that the ranging result and the ranging security level meet a requirement. If the authentication device determines that the ranging result and the ranging security level meet a requirement, S1207 is performed. If the authentication device determines that the ranging result and the ranging security level do not meet a requirement, S1209 is performed.

In some embodiments, after determining that the authentication result sent by the trusted holding device is the non-real-time authentication result, to further reduce a risk that an operation owner is unaware of and uncontrollable, the authentication device may trigger ranging, to obtain a ranging result. For example, the authentication device determines, based on the ranging result, that the trusted holding device is within a preset distance range, and may determine that the ranging result meets a requirement.

In some examples, if the ranging result meets the requirement, but the ranging security level of the trusted holding device does not meet the requirement, the user identity authentication may fail. Therefore, the authentication device may re-confirm the ranging security level of the trusted holding device, to determine whether the authentication trust level corresponding to the ranging security level meets a target authentication trust level requirement.

For example, as shown in Table 3, different ranging processes correspond to different ranging security levels. Further, the authentication device may determine the security capability level of the trusted holding device based on the ranging security level, and determine, based on the security capability level of the trusted holding device, whether the authentication trust level in the final authentication result meets the target authentication trust level requirement. Therefore, when determining that both the ranging result and the ranging security level meet the requirement, the authentication device may obtain the final authentication result. In other words, if the requirement is met, the final authentication result may be obtained, that is, step S1207 is performed; if the requirement is not met, user confirmation may be triggered, that is, step S1209 is performed.

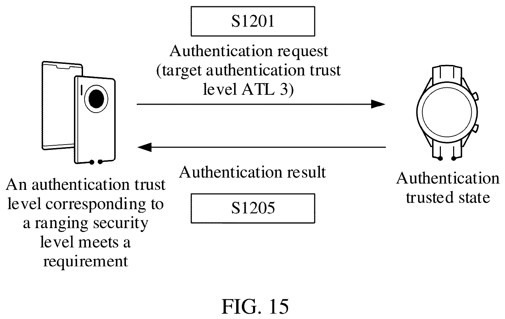

For example, as shown in FIG. 15, the authentication device triggers user identity authentication in response to a user operation, and sends an authentication request to the trusted holding device. The trusted holding device is in an authentication trusted state, and may directly match a corresponding authentication result based on a valid authentication event list, and send the authentication result to the authentication device. Then, the authentication device performs ranging based on the authentication result, determines that an authentication trust level corresponding to a ranging result and a ranging security level meets a target authentication trust level requirement, and may determine that the user identity authentication succeeds. It can be learned that, in the foregoing process, user identity authentication is completed without being perceived by the user, thereby improving use convenience for the user while meeting a security requirement.

It should be understood that, as shown in Table 3, in step S1208, in a process of determining the ranging security level, the authentication device may determine the ranging security level through real-time ranging, or may determine the ranging security level based on ranging capabilities supported by the authentication device and the trusted holding device.

S1209: The authentication device sends a user confirmation request to the trusted holding device.

In some embodiments, if the authentication device determines that the authentication trust level corresponding to the ranging security level does not meet a requirement, or determines that the trusted holding device is not within a ranging range, the authentication device may send the user confirmation request to the trusted holding device, to obtain a user confirmation result. Correspondingly, the trusted holding device receives the user confirmation request sent by the authentication device.

Optionally, the authentication device may determine, based on whether the service constraint condition carries the available user confirmation identifier, whether to send the user confirmation request to the trusted holding device. For example, the authentication device sends the user confirmation request to the trusted holding device based on the available user confirmation identifier included in the service constraint condition.

Optionally, if the service constraint condition does not include the available user confirmation identifier, or the available user confirmation identifier indicates that user confirmation cannot be triggered, the user identity authentication fails.

S1210: The trusted holding device displays a confirmation interface, and obtains a confirmation result.

In some embodiments, the trusted holding device displays the confirmation interface in response to the received user confirmation request, to obtain the user confirmation result.

Optionally, the trusted holding device displays prompt information, to help the user confirm an authentication result determined by the authentication device. Optionally, the trusted holding device detects an operation like tapping a confirmation control or double-tapping a display by the user on the display interface, and determines the received user confirmation result.

S1211: The trusted holding device sends the confirmation result to the authentication device.

In some embodiments, after determining the user confirmation result, the trusted holding device may send the confirmation result to the authentication device. Correspondingly, the trusted holding device receives the confirmation result. If the confirmation result is a manual confirmation result of the user, as shown in Table 4, the authentication device matches a corresponding security capability level of the trusted holding device based on the manual confirmation result of the user.

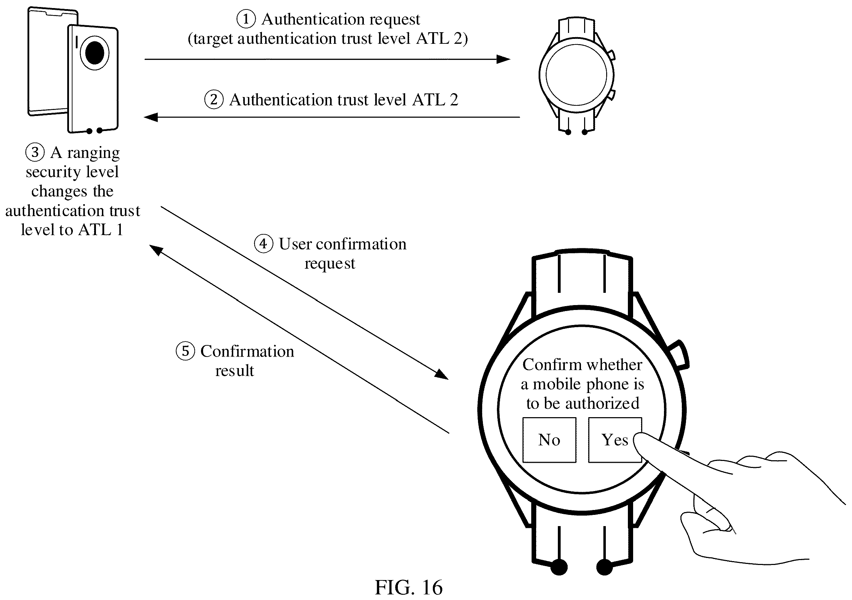

For example, as shown in FIG. 16, the authentication device sends an authentication request to the trusted holding device, and a required target authentication trust level is ATL 2 (namely, step ①). The trusted holding device determines, based on a valid authentication event list, that an authentication trust level is ATL 2, and feeds back a corresponding authentication result to the authentication device (namely, step ②). Then, the authentication device determines that the obtained authentication result is a non-real-time authentication result, and triggers ranging. For example, the authentication device determines that a ranging result meets a requirement. As shown in Table 3, the security capability level of the authentication device determined by the authentication device based on the ranging security level is a medium level. In this case, as shown in FIG. 16, a ranging level determined by the authentication device changes the authentication trust level to ATL 2-1=ATL 1 (that is, an authentication trust level 2 minus 1 is equal to an authentication trust level 1), and the authentication trust level does not meet the target authentication trust level requirement (namely, step ③). In this case, the authentication device may send a user confirmation request to the trusted holding device (namely, step ). Correspondingly, in response to the received user confirmation request, the trusted holding device may display a confirmation interface, and after detecting an operation of tapping a "Yes" control on the confirmation interface by the user, the trusted holding device may send a corresponding confirmation result to the authentication device (namely, step ⑤). The trusted holding device sends the authentication result in the following manner: sending the user confirmation result through an encrypted channel that is established based on device mutual trusted relationship authentication established based on the user operation. As shown in Table 4, the authentication device may replace the ranging security level with the user manual confirmation result, and then determine, based on the user manual confirmation result, that the corresponding security capability level of the trusted holding device is a high level. In this case, the authentication device may determine, based on the authentication trust level ATL 2 sent by the trusted holding device in step ②, that the authentication trust level in the final authentication result is ATL 2. Further, the authentication device determines that the authentication trust level in the final authentication result meets the target authentication trust level requirement, and may trigger execution of a corresponding service.

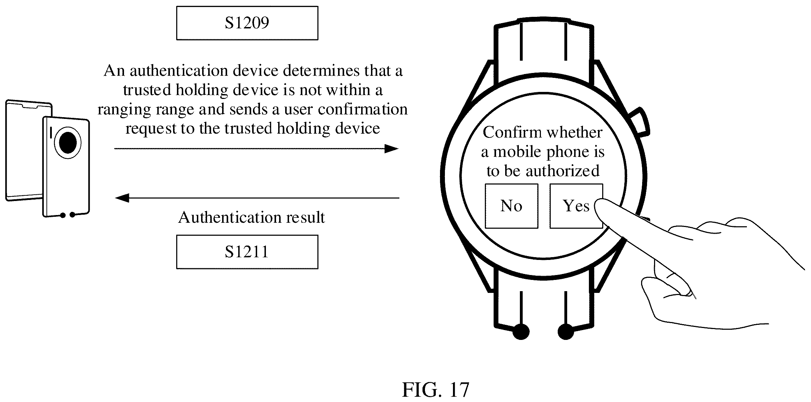

For another example, as shown in FIG. 17, the authentication device determines that the trusted holding device is not within a ranging range or cannot perform ranging, that is, the ranging result does not meet the requirement, and may send the user confirmation request to the trusted holding device. Correspondingly, in response to the received user confirmation request, the trusted holding device may display a confirmation interface, and after detecting an operation of tapping a "Yes" control on the confirmation interface by the user, the trusted holding device may send a corresponding confirmation result to the authentication device. The authentication device may determine a security capability level of the trusted holding device in a manner in which the trusted holding device sends an authentication result and based on the authentication result, and further determine a final authentication result.

In this way, in the conventional technology, if the trusted holding device is not within the ranging range, the user cannot trigger user identity authentication of the authentication device through the trusted holding device, and can only return to an authentication device side to perform user identity authentication. User operations are complex. According to the authentication method provided in this embodiment of this application, when the trusted holding device is not within the ranging range, the trusted holding device may also trigger user confirmation, and determine the final authentication result based on the authentication result determined by the trusted holding device and the user confirmation result. The user only needs to operate the trusted holding device at hand, to complete user identity authentication of the authentication device, thereby improving use convenience of the user.

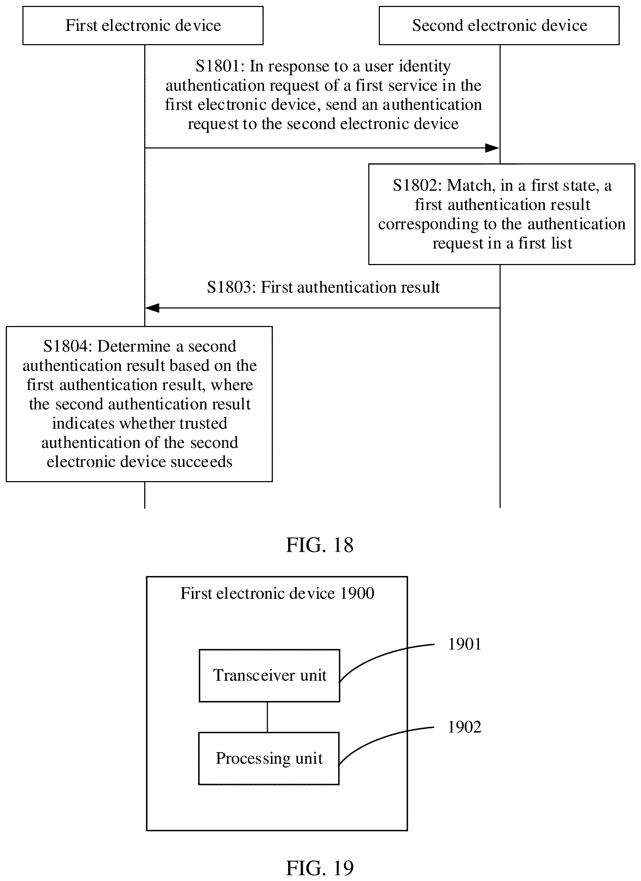

FIG. 18 is a schematic flowchart of an authentication method according to an embodiment of this application. It should be noted that the method is not limited to a specific sequence described in FIG. 18 and below. It should be understood that, in another embodiment, sequences of some steps in the method may be exchanged based on an actual requirement, or some steps in the method may be omitted or deleted. The method includes the following steps.

S1801: In response to a user identity authentication request for a first service in a first electronic device, the first electronic device sends an authentication request to a second electronic device.

An authentication trust level supported by the second electronic device meets a first authentication trust level requirement, and the first authentication trust level requirement is a lowest authentication trust level of the first service. A short-range communication connection is established between the first electronic device and the second electronic device, to ensure security of user identity authentication.

Optionally, the first service may be a function or an application in the first electronic device. For example, the first service is an unlocking function of controlling screen unlocking or screen locking of the first electronic device. In response to a user operation, the unlocking function determines that user identity authentication needs to be performed, and may send the authentication request to the second electronic device. For another example, the first service is a preset application, for example, an application store. The preset application detects a start operation of a user, determines that user identity authentication needs to be performed, and may send the authentication request to the second electronic device.

Optionally, after determining the first authentication trust level requirement required by the first service on which user identity authentication is currently to be performed, the first electronic device may send the authentication request to the second electronic device that meets the first authentication trust level requirement.

For example, the unlocking function in the first electronic device detects an unlocking operation of the user, and determines that user identity authentication is triggered. An authentication trust level requirement corresponding to the unlocking function is ATL 3, that is, a lowest authentication trust level requirement required by the unlocking function is ATL 3. In this case, the first electronic device traverses authentication trust levels supported by the second electronic device that has been paired with the first electronic device, and sends an authentication request to a trusted holding device whose highest authentication trust level is at ATL 3 or above ATL 3 supported by the second electronic device.

In some embodiments, the authentication request carries a service constraint condition, and the service constraint condition includes one or more of the following: the first authentication trust level requirement, a user identity confirmation time requirement, a user identity confirmation manner requirement, a user identity confirmation device requirement, an available user confirmation identifier, and a real-time authentication trigger identifier.

Optionally, the first service generates the service constraint condition when determining to perform user identity authentication. The first electronic device generates the authentication request based on the request of the first service, and adds one or more items in the service constraint condition to the authentication request.

The authentication trust level requirement indicates a target authentication trust level of the first service. The user identity confirmation time requirement indicates a time requirement for an available user identity authentication success event. The user identity confirmation manner requirement indicates a requirement on a user identity confirmation manner of a user identity authentication success event that matches the user identity authentication result. The user identity confirmation device requirement indicates a requirement for a device that generates a user identity authentication success event. The available user confirmation identifier indicates whether user confirmation is required. The first electronic device determines, based on the available user confirmation identifier, whether to trigger user confirmation on a second electronic device side. The real-time authentication trigger identifier indicates whether real-time user authentication is allowed. The first electronic device determines, based on the real-time authentication trigger identifier, whether to trigger real-time user authentication on the second electronic device side.

In some embodiments, before the second electronic device receives the authentication request from the first electronic device, the first electronic device needs to add the second electronic device as a trusted holding device. For example, after receiving a trusted holding device addition request from the first electronic device, the second electronic device sends device information to the first electronic device. Then, the first electronic device adds the second electronic device as a trusted holding device of the first electronic device based on the device information. After the trusted holding device is successfully added, the first electronic device sends a trusted holding device response to the second electronic device. Correspondingly, the second electronic device receives the trusted holding device response from the first electronic device, and determines that the second electronic device becomes the trusted holding device of the first electronic device. Subsequently, the second electronic device may receive the authentication request from the first electronic device, and start to perform user identity authentication.

The device information includes one or more of the following: identity authentication capability information supported by the second electronic device, a ranging manner supported by the second electronic device, a security capability level credential of the second electronic device, and device identity credential information.

For example, the identity authentication capability information supported by the second electronic device includes an authentication manner, an authentication trust level, and the like. The ranging manner supported by the second electronic device includes Bluetooth ranging, UWB ranging, and the like. The security capability level credential of the second electronic device includes a device certificate, a TEE-level key certificate, and the like. The device identity credential information includes a public key, and the like.

S1802: The second electronic device matches, in a first state, a first authentication result corresponding to the authentication request in a first list.

The first list includes at least one of a first event or a second event. The first event is a local user identity authentication success event monitored by the second electronic device, and the second event is a user identity authentication success event from the first electronic device. The user identity authentication success event includes information such as an authentication manner, an authentication trust level, authentication success time, and an authentication execution device. Optionally, the first list is, for example, a valid authentication event list.

In some embodiments, after detecting a first user identity authentication success event, the first electronic device sends the first user identity authentication success event to the second electronic device.

For example, after determining that the second electronic device has been added by the first electronic device as the trusted holding device, the second electronic device may start to monitor a user identity authentication success event generated by at least one of a local device or the first electronic device.

For another example, after receiving an authentication request from the first electronic device for the first time, that is, after starting authentication for the first time, the second electronic device starts to monitor the user identity authentication success event generated by the at least one of a local device or the first electronic device.

In some examples, authentication trust levels corresponding to different authentication manners are the same or different. In this case, the second electronic device may record, by monitoring the user identity authentication success event, user identity authentication success events corresponding to the different authentication trust levels. In this way, the second electronic device can subsequently meet authentication requirements of the first electronic device for different authentication trust levels.

In some embodiments, the second electronic device may obtain the user identity authentication success event generated by at least one of a local device or the first electronic device. In addition, when the second electronic device is in a carried state, the second electronic device records the obtained user identity authentication success event in the first list, so that the second electronic device performs user identity authentication based on the user identity authentication success event recorded in the first list.

In some examples, when determining that the second electronic device exits the carried state, the second electronic device clears the user identity authentication success event recorded in the first list, to avoid that the first list stores a user identity authentication success event recorded in a previous carried state period, affecting authentication security.

Optionally, the second electronic device further sends a first state invalidity indication to the first electronic device, where the first state invalidity indication may indicate that the second electronic device is in a second state. Optionally, the first state is, for example, an authentication trusted state, and the second state is, for example, an authentication untrusted state.

In this way, the second electronic device determines, in response to a change of the carried state, whether to record the obtained user identity authentication success event, so that in a subsequent user identity authentication process, the second electronic device can perform a user identity authentication process on the first electronic device based on the user identity authentication success event recorded in a single carried state period, thereby improving authentication security.

In some embodiments, after the second electronic device exits the carried state, the second electronic device is in the second state. Then, after the second electronic device determines that the second electronic device is in the carried state again when the second electronic device is in the second state, the second electronic device switches the second state to the first state in response to the received first user identity authentication success event from the first electronic device. The first user identity authentication success event is a user identity authentication success event detected by the first electronic device.

In this way, the second electronic device implements flexible switching between the first state and the second state through monitoring on the carried state and the user identity authentication success event, to meet a subsequent user identity authentication requirement of the first electronic device.

S1803: The second electronic device sends a first authentication result to the first electronic device.

In some embodiments, after matching a corresponding first authentication result based on the recorded user identity authentication success event, the second electronic device may send the first authentication result to the first electronic device. Correspondingly, the first electronic device receives the first authentication result from the second electronic device.

S1804: The second electronic device determines a second authentication result based on the first authentication result, where the second authentication result indicates whether trusted authentication of the second electronic device succeeds.

In some embodiments, after receiving the first authentication result, the first electronic device determines that the first authentication result is a non-real-time authentication result determined by the second electronic device based on the recorded user identity authentication success event. In this case, to ensure reliability of the authentication result, the first electronic device may further perform ranging confirmation on the second electronic device.

For example, in response to that the first authentication result is the non-real-time authentication result, the first electronic device performs ranging on the second electronic device, to generate a ranging result. When the ranging result meets a preset distance requirement, a first ranging security level of the second electronic device is determined, and a first authentication trust level carried in the first authentication result is adjusted based on the first ranging security level, to generate a second authentication trust level.

For example, security capability levels of different second electronic devices are different, and the security capability level of the second electronic device affects an authentication trust level determined by the second electronic device. Optionally, as shown in Table 3, the security capability level of the second electronic device is classified into three levels: high, medium, and low. For example, when the security capability level of the second electronic device is low, the authentication trust level determined by the second electronic device may be downgraded, to further ensure reliability of a final authentication result.

Optionally, first information is obtained, where the first information includes a security level of a trusted relationship between the first electronic device and the second electronic device, a security level of first state maintenance of the second electronic device, a security level of carried state detection of the second electronic device, and the first ranging security level. The security capability level of the second electronic device is determined based on the first information. When the security capability level is a high level, the second authentication trust level is equal to the first authentication trust level. When the security capability level is a medium level, the second authentication trust level is lower than the first authentication trust level. When the security capability level is a low level, the second authentication trust level is a level 0 or a level 1.

For example, the authentication trust level requirement carried in the authentication request is ATL 3, that is, a target authentication trust level of the first electronic device is ATL 3. The authentication trust level carried in the authentication result received by the first electronic device from the second electronic device is ATL 3.

For example, the first electronic device determines that the security capability level of the second electronic device is a high level, and then the first electronic device determines that the authentication trust level in the final authentication result is ATL 3. If the first electronic device determines that the authentication trust level meets a target authentication trust level requirement, unlocking may be triggered.

For another example, the first electronic device determines that the security capability level of the second electronic device is a medium level, and then the first electronic device determines that the authentication trust level in the final authentication result is ATL 3-1=ATL 2 (that is, an authentication trust level 3 minus 1 is equal to an authentication trust level 2). If the first electronic device determines that the authentication trust level does not meet the target authentication trust level requirement, unlocking failure may be triggered. Optionally, after unlocking fails, the first electronic device may prompt the user to perform unlocking in another manner.

In this way, different authentication trust levels supported by the second electronic device are evaluated based on different security capability levels of the second electronic device, to support service operations of different risks, thereby expanding a range of the first electronic device supported by the second electronic device, and ensuring security of using an authentication result.

In some examples, when the second authentication trust level meets the first authentication trust level requirement, the first electronic device determines that the second authentication result indicates that the trusted authentication of the second electronic device succeeds.

In some other examples, when the second authentication trust level does not meet the first authentication trust level requirement, the first electronic device sends a user confirmation request to the second electronic device. Then, the first electronic device receives a confirmation result from the second electronic device, where the confirmation result is a result determined by the second electronic device based on a user operation. The first electronic device determines the second authentication result in response to receiving the confirmation result.

For example, the first electronic device matches a corresponding second ranging security level based on a manner of receiving the confirmation result. Then, the first electronic device determines the second authentication result based on the second ranging security level. For example, as shown in Table 4, the first electronic device matches a corresponding ranging security level based on a manner of manually confirming a result by the user, to determine the security capability level of the second electronic device.

In this way, when the second electronic device is not within a ranging range or the ranging security level does not meet a requirement, the second electronic device may also determine, through user confirmation, a final authentication result based on the authentication result determined by the second electronic device and a user confirmation result. The user only needs to operate the second electronic device at hand to complete user identity authentication of the first electronic device, thereby improving use convenience of the user.

For example, as shown in FIG. 16, the first electronic device sends an authentication request to the second electronic device, where a required target authentication trust level is ATL 2 (namely, step ①). The second electronic device determines, based on the first list, that an authentication trust level is ATL 2, and feeds back a corresponding authentication result to the first electronic device (namely, step ②). Then, the first electronic device determines that the obtained authentication result is a non-real-time authentication result, and triggers ranging. For example, the first electronic device determines that a ranging result meets a requirement. As shown in Table 3, the security capability level of the first electronic device determined by the first electronic device based on the ranging security level is a medium level. As shown in FIG. 16, the ranging level determined by the first electronic device makes the authentication trust level change to ATL 2-1=ATL 1 (that is, an authentication trust level 2 minus 1 is equal to an authentication trust level 1), and the authentication trust level does not meet a target authentication trust level requirement (namely, step ③). In this case, the first electronic device may send a user confirmation request to the second electronic device (namely, step ). Correspondingly, in response to the received user confirmation request, the second electronic device may display a confirmation interface, and after detecting an operation of tapping a "Yes" control on the confirmation interface by the user, the second electronic device may send a corresponding confirmation result to the first electronic device (namely, step ⑤). The second electronic device sends the authentication result in the following manner: sending the user confirmation result through an encrypted channel that is established based on device mutual trusted relationship authentication established based on the user operation. As shown in Table 4, the first electronic device may replace the ranging security level with the user manual confirmation result, and then determine, based on the user manual confirmation result, that the corresponding security capability level of the second electronic device is a high level. In this case, the first electronic device may determine, based on the authentication trust level ATL 2 that is sent by the second electronic device and that is obtained in step , that the authentication trust level in the final authentication result is ATL 2. Further, the first electronic device determines that the authentication trust level in the final authentication result meets the target authentication trust level requirement, and may trigger execution of a corresponding service.

In some other embodiments, when the second electronic device is in a second state, the second electronic device triggers real-time authentication in response to the authentication request, to generate a third authentication result. Then, the second electronic device sends the third authentication result to the first electronic device. The third authentication result is used to generate the second authentication result indicating whether the trusted authentication of the second electronic device succeeds.

In this way, in the conventional technology, if the second electronic device is in an authentication untrusted state, the user cannot use the second electronic device to trigger user identity authentication of the first electronic device, and can only return to a first electronic device side to perform user identity authentication. User operations are complex. According to the authentication method provided in this embodiment of this application, when the second electronic device is in the authentication untrusted state, the second electronic device may also trigger real-time user authentication. The user only needs to operate the second electronic device at hand to complete user identity authentication of the authentication device, thereby improving use convenience of the user.

Optionally, the first electronic device may further perform the steps and functions performed by the authentication device in the foregoing embodiments, and the second electronic device may further perform the steps and functions performed by the trusted holding device in the foregoing embodiments, to implement the authentication method provided in the foregoing embodiments.

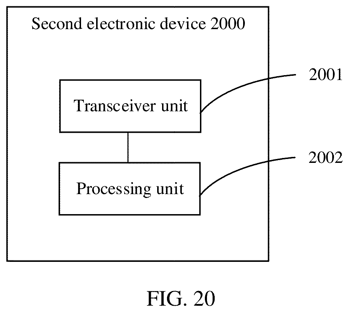

The authentication methods provided in embodiments of this application are described above in detail with reference to FIG. 14 to FIG. 18. The following describes in detail the first electronic device and the second electronic device provided in embodiments of this application with reference to FIG. 19 and FIG. 20.

In a possible design, FIG. 19 is a diagram of a structure of a first electronic device according to an embodiment of this application. As shown in FIG. 19, a first electronic device 1900 may include a transceiver unit 1901 and a processing unit 1902. The first electronic device 1900 may be configured to implement functions of the authentication device in the foregoing method embodiments.

Optionally, the transceiver unit 1901 is configured to support the first electronic device 1900 in performing S501, S502, and S504 in FIG. 5; or support the first electronic device 1900 in performing S901a, S902, and S908 in FIG. 9; or support the first electronic device 1900 in performing S1201, S1205, S1209, and S1211 in FIG. 12A and FIG. 12B.

Optionally, the processing unit 1902 is configured to support the first electronic device 1900 in performing S505 in FIG. 5; or is configured to support the first electronic device 1900 in performing S1206, S1208, and S1207 in FIG. 12A and FIG. 12B.

The transceiver unit may include a receiving unit and a sending unit, may be implemented by a transceiver or a transceiver-related circuit component, and may be a transceiver or a transceiver module. Operations or functions of the units in the first electronic device 1900 are separately used to implement corresponding procedures of the authentication method in the foregoing method embodiments. All related content of the steps in the foregoing method embodiments may be cited in function descriptions of corresponding functional units. For brevity, details are not described herein again.

Optionally, the first electronic device 1900 shown in FIG. 19 may further include a storage unit (not shown in FIG. 19), and the storage unit stores a program or instructions. When the transceiver unit 1901 and the processing unit 1902 execute the program or the instructions, the first electronic device 1900 shown in FIG. 19 may be enabled to perform the authentication method in the foregoing method embodiments.

For technical effect of the first electronic device 1900 shown in FIG. 19, refer to technical effect of the authentication method in the foregoing method embodiments. Details are not described herein again.

In addition to a form of the first electronic device 1900, the technical solutions provided in this application may also be a functional unit or a chip in the first electronic device, or an apparatus used together with the first electronic device.

In a possible design, FIG. 20 is a diagram of a structure of a second electronic device according to an embodiment of this application. As shown in FIG. 20, a second electronic device 2000 may include a transceiver unit 2001 and a processing unit 2002. The second electronic device 2000 may be configured to implement functions of the trusted holding device in the foregoing method embodiments.

Optionally, the transceiver unit 2001 is configured to support the second electronic device 2000 in performing S501, S502, and S504 in FIG. 5; or is configured to support the second electronic device 2000 in performing S901a, S902, and S908 in FIG. 9; or is configured to support the second electronic device 2000 in performing S1201, S1205, S1209, and S1211 in FIG. 12A and FIG. 12B.

Optionally, the processing unit 2002 is configured to support the second electronic device 2000 in performing S503 in FIG. 5; or is configured to support the second electronic device 2000 in performing S901b, S903, S904, S905, S906, and S907 in FIG. 9; or is configured to support the second electronic device 2000 in performing S1202, S1203, S1204, and S1210 in FIG. 12A and FIG. 12B.

The transceiver unit may include a receiving unit and a sending unit, may be implemented by a transceiver or a transceiver-related circuit component, and may be a transceiver or a transceiver module. Operations or functions of the units in the second electronic device 2000 are separately used to implement corresponding procedures of the authentication method in the foregoing method embodiments. All related content of the steps in the foregoing method embodiments may be cited in function descriptions of corresponding functional units. For brevity, details are not described herein again.

Optionally, the second electronic device 2000 shown in FIG. 20 may further include a storage unit (not shown in FIG. 20), and the storage unit stores a program or instructions. When the transceiver unit 2001 and the processing unit 2002 execute the program or the instructions, the second electronic device 2000 shown in FIG. 20 may be enabled to perform the authentication method in the foregoing method embodiments.

For technical effect of the second electronic device 2000 shown in FIG. 20, refer to technical effect of the authentication method in the foregoing method embodiments. Details are not described herein again.

In addition to a form of the second electronic device 2000, the technical solutions provided in this application may also be a functional unit or a chip in the second electronic device, or an apparatus used together with the second electronic device.

An embodiment of this application further provides a chip system, including a processor, the processor is coupled to a memory, and the memory is configured to store a program or instructions. When the program or the instructions are executed by the processor, the chip system is enabled to implement the method according to any one of the foregoing method embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in embodiments of this application. For example, the memory may be a nontransitory processor, for example, a read-only memory ROM. The memory and the processor may be integrated into a same chip, or may be separately disposed on different chips. A type of the memory and a manner of disposing the memory and the processor are not specifically limited in embodiments of this application.

For example, the chip system may be a field programmable gate array (field programmable gate array, FPGA), an application-specific integrated circuit (application-specific integrated circuit, ASIC), a system on chip (system on chip, SoC), a central processing unit (central process unit, CPU), a network processor (network processor, NP), a digital signal processor (digital signal processor, DSP), a micro controller unit (micro controller unit, MCU), a programmable logic device (programmable logic device, PLD), or another integrated chip.

It should be understood that the steps in the foregoing method embodiments may be completed by using an integrated logic circuit of hardware in the processor or instructions in a form of software. The steps of the method disclosed with reference to embodiments of this application may be directly performed by a hardware processor, or may be performed through a combination of hardware in the processor and a software module.

An embodiment of this application further provides a computer-readable storage medium. The computer-readable storage medium stores a computer program. When the computer program is run on a computer, the computer is enabled to perform the foregoing related steps, to implement the authentication method in the foregoing embodiments.

An embodiment of this application further provides a computer program product. When the computer program product runs on a computer, the computer is enabled to perform the foregoing related steps, to implement the authentication method in the foregoing embodiments.

In addition, an embodiment of this application further provides an apparatus. The apparatus may be specifically a component or a module, and the apparatus may include one or more processors and memories that are connected to each other. The memory is configured to store a computer program. When the computer program is executed by the one or more processors, the apparatus is enabled to perform the authentication method in the foregoing method embodiments.

The apparatus, the computer-readable storage medium, the computer program product, or the chip provided in embodiments of this application is configured to perform the corresponding method provided above. Therefore, for beneficial effect that can be achieved, refer to beneficial effect in the corresponding method provided above, and details are not described herein again.

Methods or algorithm steps described in combination with the content disclosed in this embodiment of this application may be implemented by hardware, or may be implemented by a processor by executing a software instruction. The software instructions may include a corresponding software module. The software module may be stored in a random access memory (random access memory, RAM), a flash memory, a read-only memory (read-only memory, ROM), an erasable programmable read-only memory (erasable programmable ROM, EPROM), an electrically erasable programmable read-only memory (electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be located in an application-specific integrated circuit (application-specific integrated circuit, ASIC).

The description of the foregoing implementations allows a person skilled in the art to clearly understand that, for the purpose of convenient and brief description, division of the foregoing functional modules is used as merely an example for description. During actual application, the foregoing functions can be allocated to different functional modules for implementation based on a requirement. That is, an internal structure of the apparatus is divided into different functional modules to implement all or some of the functions described above. For a detailed working process of the foregoing system, apparatus, and unit, refer to a corresponding process in the foregoing method embodiments, and details are not described herein again.

In the several embodiments provided in this application, it should be understood that the disclosed method may be implemented in other manners. The apparatus embodiment described above is merely an example. For example, division into the modules or units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the modules or units may be implemented in electronic, mechanical, or other forms.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

The computer-readable storage medium includes but is not limited to any one of the following: any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. An authentication system, wherein the system comprises a first electronic device and a second electronic device, and a short-range communication connection is established between the first electronic device and the second electronic device;
the first electronic device is configured to:
send an authentication request to the second electronic device in response to a user identity authentication request of a first service in the first electronic device, wherein an authentication trust level supported by the second electronic device meets a first authentication trust level requirement, and the first authentication trust level requirement is a lowest authentication trust level of the first service;
receive a first authentication result from the second electronic device; and
determine a second authentication result based on the first authentication result, wherein the second authentication result indicates whether trusted authentication of the second electronic device succeeds; and
the second electronic device is configured to:
when the second electronic device is in a first state, match the first authentication result corresponding to the authentication request in a first list, wherein the first list comprises at least one of a first event or a second event, the first event is a local user identity authentication success event monitored by the second electronic device, and the second event is a user identity authentication success event from the first electronic device; and
send the first authentication result to the first electronic device.

2. The system according to claim 1, wherein
the second electronic device is further configured to:
perform real-time authentication in a second state, to generate a third authentication result; and
send the third authentication result to the first electronic device; and
the first electronic device is further configured to:
receive the third authentication result from the second electronic device; and
detect that the third authentication result is a real-time authentication result, and determine the second authentication result based on the third authentication result.

3. The system according to claim 1 or 2, wherein
the first electronic device is further configured to:
detect that the first authentication result is a non-real-time authentication result, perform ranging on the second electronic device, to generate a ranging result, and determine a first ranging security level of the second electronic device; and
when the ranging result meets a preset distance requirement, adjust, based on the first ranging security level, a first authentication trust level carried in the first authentication result, to generate the second authentication result, wherein the second authentication result comprises a second authentication trust level, and when the second authentication trust level meets the first authentication trust level requirement, the second authentication result indicates that the trusted authentication of the second electronic device succeeds.

4. The system according to claim 3, wherein
the first electronic device is further configured to:
send a user confirmation request to the second electronic device when the second authentication trust level does not meet the first authentication trust level requirement;
the second electronic device is further configured to:
receive the user confirmation request from the first electronic device;
in response to receiving the user confirmation request, obtain a confirmation result based on a user operation; and
send the confirmation result to the first electronic device; and
the first electronic device is further configured to:
receive the confirmation result from the second electronic device; and
determine the second authentication result in response to receiving the confirmation result.

5. The system according to any one of claims 1 to 4, wherein
the second electronic device is further configured to:
obtain a user identity authentication success event, and record the user identity authentication success event in the first list in a carried state, wherein the user identity authentication success event is from at least one of the second electronic device or the first electronic device; and
when it is determined that the carried state is exited, clear the user identity authentication success event recorded in the first list.

6. An authentication method, applied to a first electronic device, wherein the method comprises:
sending an authentication request to a second electronic device in response to a user identity authentication request of a first service in the first electronic device, wherein a short-range communication connection is established between the first electronic device and the second electronic device, an authentication trust level supported by the second electronic device meets a first authentication trust level requirement, and the first authentication trust level requirement is a lowest authentication trust level required by the first service;
receiving a first authentication result from the second electronic device, wherein the first authentication result is an authentication result that is obtained by the second electronic device in a first state through matching in a first list, the first list comprises at least one of a first event or a second event, the first event is a local user identity authentication success event monitored by the second electronic device, and the second event is a user identity authentication success event from the first electronic device; and
determining a second authentication result based on the first authentication result, wherein the second authentication result indicates whether trusted authentication of the second electronic device succeeds.

7. The method according to claim 6, wherein the method further comprises:
receiving a third authentication result from the second electronic device, wherein the third authentication result is an authentication result generated by the second electronic device in a second state through real-time authentication; and
determining the second authentication result based on the third authentication result.

8. The method according to claim 6 or 7, wherein determining the second authentication result based on the first authentication result comprises:
detecting that the first authentication result is a non-real-time authentication result, and performing ranging on the second electronic device, to generate a ranging result; and
when the ranging result meets a preset distance requirement, determining a first ranging security level of the second electronic device, and adjusting, based on the first ranging security level, a first authentication trust level carried in the first authentication result, to determine the second authentication result, wherein the second authentication result comprises a second authentication trust level.

9. The method according to claim 8, wherein when the second authentication trust level meets the first authentication trust level requirement, the second authentication result indicates that the trusted authentication of the second electronic device succeeds.

10. The method according to claim 8 or 9, wherein the method further comprises:
sending a user confirmation request to the second electronic device when the second authentication trust level does not meet the first authentication trust level requirement;
receiving a confirmation result from the second electronic device, wherein the confirmation result is a result determined by the second electronic device based on a user operation; and
determining the second authentication result in response to receiving the confirmation result.

11. The method according to claim 10, wherein determining the second authentication result in response to receiving the confirmation result comprises:
matching a corresponding second ranging security level based on a manner of receiving the confirmation result; and
determining the second authentication result based on the second ranging security level.

12. The method according to any one of claims 8 to 11, wherein adjusting, based on the first ranging security level, the first authentication trust level carried in the first authentication result comprises:
obtaining first information, wherein the first information comprises a security level of a trusted relationship between the first electronic device and the second electronic device, a security level of first state maintenance of the second electronic device, a security level of carried state detection of the second electronic device, and the first ranging security level; and
determining a security capability level of the second electronic device based on the first information, wherein
when the security capability level is a high level, the second authentication trust level is equal to the first authentication trust level;
when the security capability level is a medium level, the second authentication trust level is lower than the first authentication trust level; and
when the security capability level is a low level, the second authentication trust level is a level 0 or a level 1.

13. The method according to any one of claims 6 to 12, wherein before sending the authentication request to the second electronic device in response to the user identity authentication request of the first service in the first electronic device, the method further comprises:
sending a trusted holding device addition request to the second electronic device;
receiving device information from the second electronic device, wherein the device information is information determined by the second electronic device in response to receiving the trusted holding device addition request; and
adding the second electronic device as a trusted holding device based on the device information.

14. The method according to claim 13, wherein the device information comprises one or more of the following: identity authentication capability information supported by the second electronic device, a ranging manner supported by the second electronic device, a security capability level credential of the second electronic device, and device identity credential information.

15. The method according to any one of claims 6 to 14, wherein the authentication request carries a service constraint condition, and the service constraint condition comprises one or more of the following: the first authentication trust level requirement, a user identity confirmation time requirement, a user identity confirmation manner requirement, a user identity confirmation device requirement, an available user confirmation identifier, and a real-time authentication trigger identifier.

16. The method according to any one of claims 6 to 15, wherein the method further comprises:
detecting a first user identity authentication success event; and
sending the first user identity authentication success event to the second electronic device.

17. An authentication method, applied to a second electronic device, wherein the method comprises:
receiving an authentication request from a first electronic device, wherein a short-range communication connection is established between the first electronic device and the second electronic device, an authentication trust level supported by the second electronic device meets a first authentication trust level requirement, and the first authentication trust level requirement is a lowest authentication trust level of a first service on which user identity authentication is to be performed in the first electronic device;
matching, in a first state, a first authentication result corresponding to the authentication request in a first list, wherein the first list comprises at least one of a first event or a second event, the first event is a local user identity authentication success event monitored by the second electronic device, and the second event is a user identity authentication success event from the first electronic device; and
sending the first authentication result to the first electronic device, wherein the first authentication result is used to generate a second authentication result indicating whether trusted authentication of the second electronic device succeeds.

18. The method according to claim 17, wherein the method further comprises:
performing real-time authentication in a second state, to generate a third authentication result; and
sending the third authentication result to the first electronic device, wherein the third authentication result is used to generate the second authentication result indicating whether the trusted authentication of the second electronic device succeeds.

19. The method according to claim 17 or 18, wherein the method further comprises:
receiving a confirmation request from the first electronic device, wherein the confirmation request is a request sent by the first electronic device to the second electronic device when the first electronic device determines that a second authentication trust level does not meet the first authentication trust level requirement, and the second authentication trust level is an authentication trust level determined after the first electronic device adjusts a first authentication trust level carried in the first authentication result;
in response to receiving the user confirmation request, obtaining a confirmation result based on a user operation; and
sending the confirmation result to the first electronic device, wherein the confirmation result is used to determine the second authentication result.

20. The method according to any one of claims 17 to 19, wherein before receiving the authentication request from the first electronic device, the method further comprises:
obtaining a user identity authentication success event, wherein the user identity authentication success event is from at least one of the second electronic device or the first electronic device; and
recording the user identity authentication success event in the first list in a carried state.

21. The method according to any one of claims 17 to 20, wherein before receiving the authentication request from the first electronic device, the method further comprises:
when it is determined that the carried state is exited, clearing the user identity authentication success event recorded in the first list; and
sending a first state invalidity notification to the first electronic device, wherein the first state invalidity notification indicates that the second electronic device is in the second state.

22. The method according to any one of claims 17 to 21, wherein before receiving the authentication request from the first electronic device, the method further comprises:
receiving a trusted holding device addition request from the first electronic device;
sending device information to the first electronic device, wherein the device information is used to add the second electronic device as a trusted holding device of the first electronic device; and
receiving a trusted holding device addition response from the first electronic device, and determining to become the trusted holding device of the first electronic device.

23. The method according to claim 22, wherein the device information comprises one or more of the following: identity authentication capability information supported by the second electronic device, a ranging manner supported by the second electronic device, a security capability level credential of the second electronic device, and device identity credential information.

24. The method according to any one of claims 17 to 23, wherein the second electronic device is in the carried state, and the method further comprises:
in the second state, receiving a first user identity authentication success event from the first electronic device, wherein the first user identity authentication success event is the user identity authentication success event detected by the first electronic device; and
switching the second state to the first state.

25. The method according to any one of claims 17 to 24, wherein the authentication request carries a service constraint condition, and the service constraint condition comprises one or more of the following: the first authentication trust level requirement, a user identity confirmation time requirement, a user identity confirmation manner requirement, a user identity confirmation device requirement, an available user confirmation identifier, and a real-time authentication trigger identifier.

26. An electronic device, comprising a processor and a memory, wherein the memory is coupled to the processor, the memory is configured to store computer program code, the computer program code comprises computer instructions, and when the processor reads the computer instructions from the memory, the electronic device is enabled to perform the method according to any one of claims 6 to 16, or the electronic device is enabled to perform the method according to any one of claims 17 to 25.

27. A computer-readable storage medium, wherein the computer-readable storage medium comprises a computer program, and when the computer program is run on an electronic device, the electronic device is enabled to perform the method according to any one of claims 6 to 16, or the electronic device is enabled to perform the method according to any one of claims 17 to 25.

28. A computer program product, wherein when the computer program product runs on a computer, the computer is enabled to perform the method according to any one of claims 6 to 25.
